# EUROPEAN PATENT APPLICATION

(11) **EP 4 832 591 A1**
(43) Date of publication of application: **28.10.2026**
(21) Application number: 23962028.9
(22) Date of filing: 22.12.2023
(51) Int. Cl.: H04W 52/02

(54) **INFORMATION TRANSMISSION METHOD AND APPARATUS, AND STORAGE MEDIUM**

(71) Applicant: Beijing Xiaomi Mobile Software Co., Ltd., Beijing 100085 (CN)
(72) Inventor: WU, Shijuan, Beijing 100085 (CN); WANG, Lei, Beijing 100085 (CN)
(74) Representative: Hersina, Günter
(86) International application number: PCT/CN2023/141280
(87) International publication number: WO 2025/129706

(57) **Abstract**

The present disclosure provides an information transmission method and apparatus, and a storage medium. The method comprises: determining a resource location at which a first signal is located; attempting to receive the first signal at the resource location; and, in response to successfully receiving the first signal, on the basis of the first signal, determining that a transmission state of an on-demand signal has changed. According to the present disclosure, the energy consumption of a network device is reduced, and the availability of network energy conservation is enhanced. Moreover, the complexity of implementation by a terminal can be reduced.

## Description

### TECHNICAL FIELD

The present disclosure relates to the field of communications, and more particularly to an information transmission method and apparatus, and a storage media.

### BACKGROUND

In Release-18 (R-18), requirements for network energy consumption are introduced.

### SUMMARY

To reduce a network energy consumption, embodiments of the present disclosure provide an information transmission method and apparatus, and a storage medium.

According to a first aspect of embodiments of the present disclosure, an information transmission method is provided, including:
determining a resource position where a first signal is located;
attempting to receive the first signal at the resource position; and
in response to successfully receiving the first signal, determining, based on the first signal, that a transmission state of an on demand signal changes.

According to a second aspect of embodiments of the present disclosure, an information transmission method is provided, including:
determining that a transmission state of an on demand signal needs to be changed;
determining a resource position where a first signal is located; and
transmitting the first signal to a terminal at the resource position.

According to a third aspect of embodiments of the present disclosure, a terminal is provided, including:
a processing module, configured to determine a resource position where a first signal is located; and
a transceiver module, configured to attempt to receive the first signal at the resource position.

The processing module is further configured to, in response to successfully receiving the first signal, determine, based on the first signal, that a transmission state of an on demand signal changes.

According to a fourth aspect of embodiments of the present disclosure, a network device is provided, including:
a processing module, configured to determine that a transmission state of an on demand signal needs to be changed,
in which the processing module is further configured to determine a resource position where a first signal is located; and
a transceiver module, configured to send the first signal to a terminal at the resource position.

According to a fifth aspect of embodiments of the present disclosure, a terminal is provided, including:
one or more processors,
in which the one or more processor are configured to perform the information transmission method according to any one of the first aspects.

According to a sixth aspect of embodiments of the present disclosure, a network device is provided, including:
one or more processors,
in which the one or more processors are configured to perform the information transmission according to any one of the second aspects.

According to a seventh aspect of embodiments of the present disclosure, a communication system is provided, including a terminal and a network device. The terminal is configured to perform the information transmission method according to any one of the first aspects, and the network device is configured to perform the information transmission method according to any one of the second aspects.

According to an eighth aspect of embodiments of the present disclosure, a storage medium is provided, having stored thereon instructions that, when run on a communication device, cause the communication device to perform the information transmission method according to any one of the first aspects or any one of the second aspects.

In embodiments of the present disclosure, the terminal may determine the resource position where the first signal is located, and may determine the transmission state of the on demand signal based on the first signal, thereby reducing an energy consumption of the network device, improving an availability of network energy saving, and further reducing a complexity of terminal implementation.

It is to be understood that both the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the present disclosure.
FIG. 1A is an illustrative schematic diagram of an architecture of a communication system according to an embodiment of the present disclosure.
FIG. 1B is a schematic diagram of a scenario for transmitting an on demand signal according to an embodiment of the present disclosure.
FIG. 2A is an illustrative interactive schematic diagram of an information transmission method according to an embodiment of the present disclosure.
FIG. 2B is an illustrative interactive schematic diagram of an information transmission method according to an embodiment of the present disclosure.
FIG. 3A is an illustrative interactive schematic diagram of an information transmission method according to an embodiment of the present disclosure.
FIG. 3B is an illustrative interactive schematic diagram of an information transmission method according to an embodiment of the present disclosure.
FIG. 3C is an illustrative interactive schematic diagram of an information transmission method according to an embodiment of the present disclosure.
FIG. 3D is an illustrative interactive schematic diagram of an information transmission method according to an embodiment of the present disclosure.
FIG. 4A is an illustrative interactive schematic diagram of an information transmission method according to an embodiment of the present disclosure.
FIG. 4B is an illustrative interactive schematic diagram of an information transmission method according to an embodiment of the present disclosure.
FIG. 4C is an illustrative interactive schematic diagram of an information transmission method according to an embodiment of the present disclosure.
FIG. 4D is an illustrative schematic diagram of a cell-specific reference signal (CRS) pattern according to an embodiment of the present disclosure.
FIG. 4E is an illustrative schematic diagram of a synchronization signal/physical broadcast channel (PBCH) block (SSB) according to an embodiment of the present disclosure.
FIG. 5A is an illustrative interactive schematic diagram of a terminal according to an embodiment of the present disclosure.
FIG. 5B is an illustrative interactive schematic diagram of a network device according to an embodiment of the present disclosure.
FIG. 6A is an illustrative interactive schematic diagram of a communication device according to an embodiment of the present disclosure.
FIG. 6B is an illustrative interactive schematic diagram of a chip according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Embodiments of the present disclosure provide an information transmission method and apparatus, and a storage medium.

In a first aspect, embodiments of the present disclosure provide an information transmission method, including:
determining a resource position where a first signal is located;
attempting to receive the first signal at the resource position; and
in response to successfully receiving the first signal, determining, based on the first signal, that a transmission state of an on demand signal changes.

In the above embodiments, a terminal may determine the resource position where the first signal is located, and may determine the transmission state of the on demand signal based on the first signal, thereby reducing the energy consumption of a network device, improving the availability of network energy saving, and reducing the complexity of terminal implementation.

In some embodiments in combination with the first aspect, in some embodiments, the first signal is any one of:
a first reference signal, including any one of: a cell-specific reference signal (CRS); and a channel state information-reference signal (CSI-RS);
a synchronization signal/physical broadcast channel (PBCH) block (SSB), including one or two of: a primary synchronization signal (PSS), a secondary synchronization signal (SSS), and a PBCH; and
a first SSB, only indicating the transmission state of the on demand signal.

In the above embodiments, the first signal may be any of a reference signal, the simplified SSB, and the first SSB. The terminal may determine that the transmission state of the on demand signal changes via the first signal, so as to ensure consistent understanding between the terminal and a network device, with a high usability.

In some embodiments in combination with the first aspect, in some embodiments, the first signal indicates at least one of:
stopping transmitting one or more of on demand signals;
transmitting one or more of the on demand signals; or
an acknowledge (ACK) message, configured to respond to a request message and acknowledge a transmission of one or more of the on demand signals, in which the request message is configured to request the transmission of one or more of the on demand signals.

In the above embodiments, the first signal may indicate at least one of the above, reducing the complexity of terminal implementation.

In some embodiments in combination with the first aspect, in some embodiments, the on demand signal includes at least one of:
a second SSB, being a periodically transmitted SSB;
a system message;
a random access channel (RACH); or
a system information block (SIB).

In the above embodiments, the on demand signal may be at least one of the above, which reduces the energy consumption of the network device, improves the availability of network energy saving, and further reduces the complexity of terminal implementation.

In some embodiments in combination with the first aspect, in some embodiments, determining the resource position where the first signal is located includes at least one of:
determining the resource position where the first signal is located based on a first radio resource control (RRC) signaling, in which the first RRC signaling is used to configure the resource position where the first signal is located; or
determining the resource position where the first signal is located based on a predefined manner.

In the above embodiments, the terminal may determine, based on the first RRC signaling and/or the predefined manner sent by the network device, a time-frequency domain resource position where the first signal is located, which is simple to implement and has the high availability.

In some embodiments in combination with the first aspect, in some embodiments, the method further includes:
determining a plurality of patterns corresponding to the first signal based on the predefined manner; and
determining a first pattern used by the first signal from the plurality of patterns based on the first RRC signaling;
in which attempting to receive the first signal at the resource position includes:
attempting to receive the first signal at the resource position according to the first pattern.

In the above embodiments, the terminal may determine the plurality of patterns corresponding to the first signal based on the predefined manner, determine the first pattern used by the first signal based on the first RRC signaling sent by the network device, and attempt to receive the first signal at the corresponding resource position according to the first pattern, thereby determining the transmission state of the on demand signal, reducing the energy consumption of the network device, improving the availability of network energy saving, and further reducing the complexity of terminal implementation.

In some embodiments in combination with the first aspect, in some embodiments, the method further includes at least one of:
determining a sequence corresponding to the first signal based on a second RRC signaling, in which the second RRC signaling is used to configure the sequence corresponding to the first signal; and
determining a sequence corresponding to the first signal based on the predefined manner.

In the above embodiments, the terminal may determine the sequence corresponding to the first signal based on the second RRC signaling and/or the predefined manner sent by the network device, so as to receive the first signal, which has the high availability.

In some embodiments in combination with the first aspect, in some embodiments, the method further includes at least one of:
in a case where the first signal is a CSI-RS and a quantity of time units occupied by the CSI-RS is equal to a first value, determining the CSI-RS to indicate that the transmission state of the on demand signal changes;
in a case where the first signal is the CSI-RS and a quantity of resource blocks (RBs) occupied by the CSI-RS is equal to a second value, determining the CSI-RS to indicate that the transmission state of the on demand signal changes; or
in a case where the first signal is the CSI-RS and a first pattern used by the CSI-RS is one of specified patterns, determining the CSI-RS to indicate that the transmission state of the on demand signal changes.

In the above embodiments, in a case where the first signal is the CSI-RS, the terminal may determine the CSI-RS to indicate that the transmission state of the on demand signal changes based on at least one of the above manners, so as to be compatible with traditional solutions, reduce the energy consumption of the network device, improve the availability of network energy saving, and further reduce the complexity of terminal implementation.

The above method reduces the energy consumption of the network device, improves the availability of network energy saving, and further reduces the complexity of terminal implementation.

In some embodiments in combination with the first aspect, in some embodiments, the method further includes:
receiving indication information sent by a network device in a case where the first signal is a CSI-RS, in which the indication information indicates that the CSI-RS indicates that the transmission state of the on demand signal changes.

In the above embodiments, in a case where the first signal is the CSI-RS, the terminal may directly determine the CSI-RS to indicate that the transmission state of the on demand signal changes based on the indication information sent by the network device, so as to be compatible with traditional solutions, reduce the energy consumption of the network device, improve the availability of network energy saving, and further reduce the complexity of terminal implementation.

In some embodiments in combination with the first aspect, in some embodiments, the method further includes any one of:
in a case where the first signal indicates discarding a transmission of one or more of on demand signals, determining to no longer receive and/or no longer send one or more of the on demand signals;
in a case where the first signal indicates the transmission of one or more of the on demand signals, starting receiving one or more of the on demand signals, and/or starting transmitting one or more of the on demand signals; and
in a case where the first signal indicates an ACK message, starting receiving one or more of the on demand signals, and/or starting transmitting one or more of the on demand signals, in which the ACK message is configured to respond to a request message and acknowledge the transmission of one or more of the on demand signals, and the request message is configured to request the transmission of one or more of the on demand signals.

In the above embodiments, the terminal may perform corresponding operations after determining that the transmission state of the on demand signal changes, which features simple implementation and high availability.

In some embodiments in combination with the first aspect, in some embodiments, the first SSB signal is any one of:
a non-cell-defining SSB (NCD-SSB); and
a cell-defining SSB (CD-SSB).

In the above embodiments, the first SSB signal dedicated to indicate that the transmission state of the on demand signal changes may be the NCD-SSB or the CD-SSB, thereby allowing the terminal to clearly identity that the transmission state of the on demand signal changes, with the high availability.

In a second aspect, embodiments of the present disclosure provide an information transmission method, including:
determining that a transmission state of an on demand signal needs to be changed;
determining a resource position where a first signal is located; and
transmitting the first signal to a terminal at the resource position.

In the above embodiments, a network device may send the first signal to inform the terminal that the transmission state of the on demand signal changes, thereby reducing the energy consumption of the network device, improving the availability of network energy saving, and further reducing the complexity of terminal implementation.

In some embodiments in combination with the second aspect, in some embodiments, the first signal is any one of:
a first reference signal, including any one of: a CRS; and a CSI-RS;
a simplified SSB, including one or two of: a PSS, an SSS, and a PBCH; and
a first SSB, only indicating the transmission state of the on demand signal.

In some embodiments in combination with the second aspect, in some embodiments, the first signal indicates at least one of:
stopping transmitting one or more of on demand signals;
transmitting one or more of the on demand signals; or
an ACK message, configured to respond to a request message and acknowledge a transmission of one or more of the on demand signals, in which the request message is configured to request the transmission of one or more of the on demand signals.

In some embodiments in combination with the second aspect, in some embodiments, the on demand signal includes at least one of:
a second SSB, being a periodically transmitted SSB;
a system message;
a RACH; or
an SIB.

In some embodiments in combination with the second aspect, in some embodiments, determining the resource position where the first signal is located includes:
determining the resource position where the first signal is located based on a predefined manner.

In some embodiments in combination with the second aspect, in some embodiments, the method further includes:
transmitting a first RRC signaling, in which the first RRC signaling is used to configure the resource position where the first signal is located.

In some embodiments in combination with the second aspect, in some embodiments, the first RRC signal is further used to configure a first pattern used by the first signal.

In some embodiments in combination with the second aspect, in some embodiments, the method further includes:
determining a sequence corresponding to the first signal based on the predefined manner.

In some embodiments in combination with the second aspect, in some embodiments, the method further includes:
transmitting a second RRC signaling, in which the second RRC signaling is used to configure a sequence corresponding to the first signal.

In some embodiments in combination with the second aspect, in some embodiments, the method further includes at least one of:
in a case where the first signal is a CSI-RS, configuring a quantity of time units occupied by the CSI-RS to be equal to a first value;
in a case where the first signal is a CSI-RS, configuring a quantity of RBs occupied by the CSI-RS to be equal to a second value; or
in a case where the first signal is a CSI-RS, configuring one of specified patterns as a first pattern used by the CSI-RS.

In some embodiments in combination with the second aspect, in some embodiments, the method further includes:
transmitting indication information to the terminal in a case where the first signal is a CSI-RS, in which the indication information indicates that the CSI-RS indicates that the transmission state of the on demand signal changes.

In some embodiments in combination with the second aspect, in some embodiments, the method further includes any one of:
in a case where the first signal indicates discarding a transmission of one or more of on demand signals, no longer transmitting one or more of the on demand signals, and/or no longer receiving one or more of the on demand signals;
in a case where the first signal indicates the transmission of one or more of the on demand signals, starting transmitting one or more of the on demand signals, and/or starting receiving one or more of the on demand signals; and
in a case where the first signal indicates an ACK message, starting transmitting one or more of the on demand signals, and/or starting receiving one or more of the on demand signals; in which the ACK message is configured to respond to a request message and acknowledge the transmission of one or more of the on demand signals, and the request message is configured to request the transmission of one or more of the on demand signals.

In some embodiments in combination with the second aspect, in some embodiments, the first SSB is any one of:
a NCD-SSB; and
a CD-SSB.

In a third aspect, embodiments of the present disclosure provide a terminal, including:
a processing module, configured to determine a resource position where a first signal is located; and
a transceiver module, configured to attempt to receive the first signal at the resource position,
in which the processing module is further configured to, in response to successfully receiving the first signal, determine, based on the first signal, that a transmission state of an on demand signal changes.

In a fourth aspect, embodiments of the present disclosure provide a network device, including:
a processing module, configured to determine that a transmission state of an on demand signal needs to be changed,
in which the processing module is further configured to determine a resource position where a first signal is located; and
a transceiver module, configured to send the first signal to a terminal at the resource position.

In a fifth aspect, embodiments of the present disclosure provide a terminal, including:
one or more processors.

The one or more processors are configured to perform the information transmission method according to any one of the first aspects.

In a sixth aspect, embodiments of the present disclosure provide a network device, including:
one or more processors.

The one or more processors are configured to perform the information transmission according to any one of the second aspects.

In a seventh aspect, embodiments of the present disclosure provide a communication system, including a terminal and a network device. The terminal is configured to perform the information transmission method according to any one of the first aspects, and the network device is configured to perform the information transmission method according to any one of the second aspects.

In an eighth aspect, embodiments of the present disclosure provide a storage medium, having stored thereon instructions that, when run on a communication device, cause the communication device to perform the information transmission method according to any one of the first aspects or any one of the second aspects.

It may be understood that the above terminal, network device, communication system, storage medium, and computer program are all used to perform the method in the embodiments of the present disclosure. Therefore, for beneficial effects they may achieve, reference may be made to the beneficial effects in the corresponding method, which are not repeated here.

Embodiments of the present disclosure provide an information transmission method and apparatus, and a storage medium. In some embodiments, the terms such as information transmission method and information processing method, communication method, etc., may be used interchangeably, the terms such as information transmission apparatus and information processing apparatus, communication apparatus, etc., may be used interchangeably, and the terms such as information processing system, communication system, etc., may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, respective embodiments may be arbitrarily combined, for example, some or all steps of different embodiments may be arbitrarily combined, and a certain embodiment may be arbitrarily combined with optional implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In the embodiments of the present disclosure, "a plurality of" means two or more.

In some embodiments, the terms such as "at least one of", "one or more", "a plurality of", "multiple", etc. may be used interchangeably.

In some embodiments, the terms such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate/indicating A", and "carrying A" may be interpreted as directly carrying A or indirectly indicating A.

In some embodiments, the apparatus and device may be interpreted as physical or virtual, and their names are not limited to the names recorded in the embodiments. In some case, they may also be understood as "equipment", "device", "circuit", "network element", "node", "function", "unit", "section", "system", "network", "entity", and "subject", etc.

In some embodiments, "network" may be interpreted as a device included in a network, for example, an access network device, a core network device, etc.

In some embodiments, "access network device (AN device)" may also be referred to as "radio access network (RAN) device", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

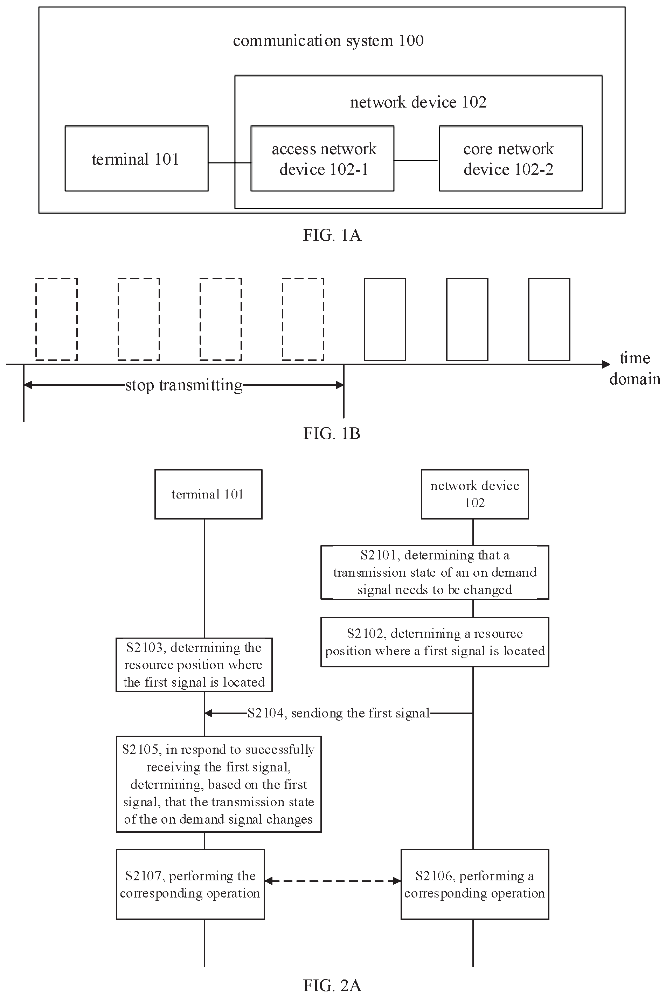

FIG. 1A is a schematic diagram of an architecture showing a communication system according to an embodiment of the present disclosure.

As shown in FIG. 1A, the communication system 100 includes a terminal 101 and a network device 102.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 may include, but is not limited to, an access network device 102-1 and a core network device 102-2.

In some embodiments, the access network device is, for example, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (Wi-Fi) system, which is not limited herein.

In some embodiments, the access network device 102-1 may be consist of a central unit (CU) and a distributed unit (DU). The CU may also be called a control unit. By adopting a CU-DU structure, a protocol layer of the access network device may be separated. Some of protocol layer functions are centrally controlled by the CU, while the remaining part or all of protocol layer functions are distributed in the DU, which is centrally controlled by the CU, but is not limited herein.

In some embodiments, the core network device 102-2 may be a device, including one or more network elements, etc., or may be a plurality of devices or device groups. The network element may be virtual or physical. The core network includes, for example, at least one of an evolved packet core (EPC), 5G core network (5GCN), or a next generation core (NGC).

In some embodiments, the technical solution of the present disclosure may be applied to an Open RAN architecture. In this case, an interface between or within access network devices involved in the embodiments of the present disclosure may be transformed into an internal interface of Open RAN. The processes and information interactions between these internal interfaces may be implemented via software or program.

In some embodiments, in some embodiments, the terminal 101 is connected to the core network device 102-2 via the access network device 102-1.

It may be understood that the communication system in the embodiments of the present disclosure is for more clearly illustrating the technical solutions in the embodiments of the present disclosure and does not constitute a limitation on the technical solutions in the embodiments of the present disclosure. Those skilled in the art may understand that with the evolution of system architectures and the emergence of new service scenarios, the technical solutions in the embodiments of the present disclosure are also applicable to similar technical problems.

The following embodiments of the disclosure may be applied to the communication system 100 or part of the subjects shown in FIG. 1A, but are not limited herein. The subjects shown in FIG. 1A are examples, and the communication system may include all or part of the subjects in FIG. 1A, or may include other subjects than those shown in FIG. 1A. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), a 6th generation mobile communication system (6G), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, systems using other communication methods, and next-generation systems based on them. In addition, the plurality of systems may also be combined (for example, a combination of LTE or LTE-A and 5G, etc.) for application.

To reduce the network power consumption, the 3rd generation partnership project (3GPP) provides a concept of on demand signal. The on demand signal refers to a signal that needs to be transmitted based on an existing configuration, but the network device determines not to transmit for a period of time based on service conditions, power consumption, and other factors.

In embodiments of the present disclosure, the on demand signal may include, but is not limited to, at least one of:
an SSB;
a system message, including, but not limited to, system information block n (SystemInformationBlockn, SIBn), where n is a positive integer, for example, SIB1; or
a RACH.

Taking the on demand signal as the SSB as an example for illustration, as shown in FIG. 1B, the terminal periodically receives a corresponding SSB. In a case where the network device stops transmitting the corresponding SSB for a period of time, and the terminal still attempts to receive the SSB during this period, it may increase the complexity of the terminal receiving the signal.

From another perspective, during the period when the network device stops transmitting the SSB, other corresponding signals, including, but not limited to, a physical downlink shared channel (PDSCH), a physical uplink shared channel (PUSCH), and UE-specific search space downlink control information (USS DCI), etc. may also not be transmitted. In a case where the above process is unknown to the terminal, it may increase the complexity of terminal implementation.

In embodiments of the present disclosure, configuration manners of the SSB and the SIB1 may be described first.

### 1. Configuration manner of SSB:

### 11) For cell search:

The SSB uses a fixed pattern, which is related to subcarrier spacing (SCS) of a carrier and has a period of 20 milliseconds (ms). Specific patterns may be found in Table 1 below.

**Table 1**

| SSB pattern | Frequency range (FR) | SCS | index | Duplex mode | n | Maximum length (Lmax) |
|---|---|---|---|---|---|---|
| case A | FR1 | 15 | {2, 8}+14n | - | 0,1/ 0,1,2,3 | 4/ 8 |
| case B | FR1 | 30 | {4, 8,16,20}+28n | - | 0/ 0,1 | 4/ 8 |
| case C | FR1 | 30 | {2, 8}+14n | time division duplex/frequ ency division duplex | 0,1/ 0,1,2,3 | 4/ 8 |
| | | | | | 0,1/ 0,1,2,3 | 4/ 8 |
| case D | FR2 | 12 0 | {4, 8,16,20}+28n | time division duplex | 0,1,2,3, 5,6,7,8,10,11,12,13,15,1 6,17,18 | 64 |
| case E | FR2 | 24 0 | {8, 12,16,20,32,40,44} | time division duplex | 0,1,2,3,5,6,7,8 | 64 |
| | | | +56n | | | |
| index | 2,8,16,22,30,36,44,50 | | | | | |

### 12) After obtaining SIB1 (via SIB1):

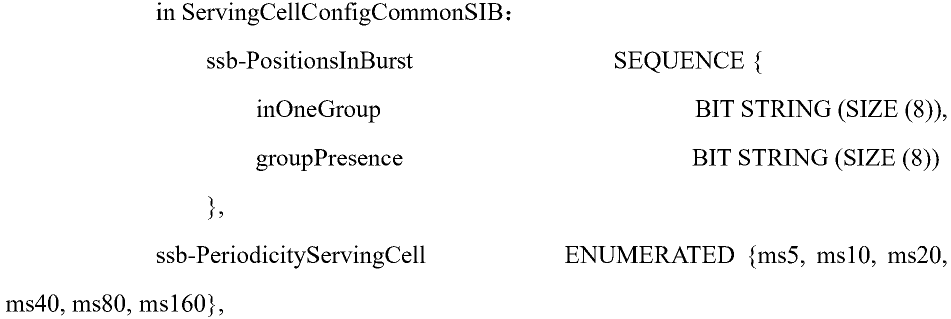

The above parameters are configured to determine an SSB period, ssb-PositionInBurst indicates an index of SSB actually transmitted within one SSB burst, and the SSB burst is determined based on the above pattern.

### 3) Determined based on a serving cell common configuration (servingcellConfigCommon):

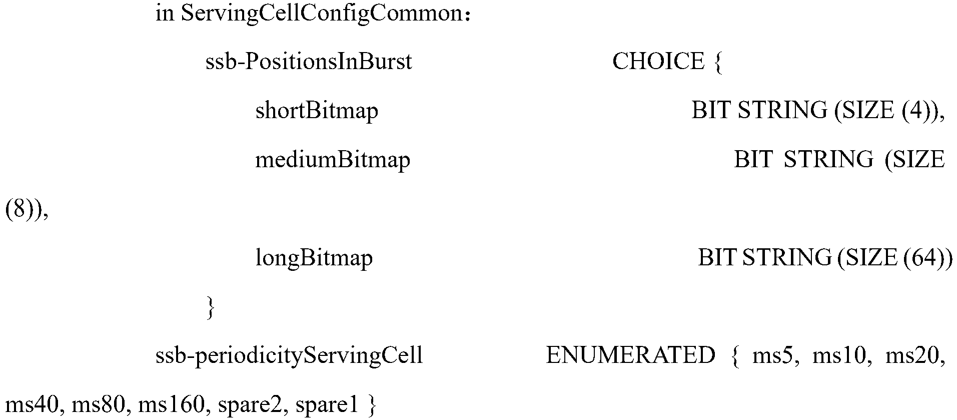

A corresponding pattern has the same configuration with the SIB1. Here, it is an indication at an SSB level, corresponding to patterns containing 4, 8, and 64 SSBs in the burst (in a licensed scenario).

A frequency domain position of the SSB is as follows:
A frequency domain range of the SSB is determined by the terminal searching and blindly detecting a corresponding SSB within a corresponding frequency domain range. The SSB occupies 20 RBs in a frequency domain.

### 2. Configuration manner of SIB1:

21) Manner 1: determined based on a master information block (MIB):
determined based on pdcch-ConfigSIB1 within the MIB, in which pdcch-ConfigSIB1 indicates a control-resource set (CORESET) #0 and SearchSpace (SS) #0 scrambled with a DCI format 0_1 (system information radio network temporary identifier SI-RNTI) for scheduling the SIB1, a default period is 20ms, and the terminal blindly detects a corresponding DCI, obtains transmission information of the SIB1, and parses a corresponding SIB1 by receiving a corresponding PDSCH at a indicated position.

22) determined based on PDCCH-configCommon within servingCellConfigCommonSIB indicated by the SIB1:
in which the information includes at least one of: searchspace SIB1 configuration, CORESET#0, or SearchSpace#0, which is mainly applied to different bandwidth parts (BWPs), one being an initial downlink (DL) BWP and the other being other active BWPs, and except for the initial DL BWP, the SCS and cyclic prefix (CP) lengths corresponding to the other BWPs are same, and a frequency domain range of the active DL BWP includes CORESET#0, or is an active BWP on the initial DL BWP.

23) determined based on PDCCH-configCommon within servingCellConfigCommon.
in which a determination manner is similar to the above manner 22, except that a CSS (SearchSpace#0 and/or searchspace SIB1) of type0 may only be configured based on a primary cell (PCell) of a master cell group (MCG).

One manner to obtain system information for a corresponding secondary cell (SCell) is through servingcellConfigCommon, but this manner cannot obtain complete system information compared to the SIB1. Another manner to obtain the system information for the SCell is through dedicatedSIB1-Delivery.

The SSB and the SIB1 belong to periodically transmitted signals, i.e. they need to be transmitted according to a certain period based on the existing transmission configuration. In embodiments of the present disclosure, the network device may determine that the signals may no longer be transmitted for a period of time based on service conditions, power consumption, etc. This type of signals is called on demand signals.

In embodiments of the present disclosure, in order to ensure that the terminal understands the transmission state of the on demand signal in a consistent manner with that of the network device after the network device changes the transmission state of the on demand signal, the following information transmission method and apparatus, and storage medium are provided, which reduce the energy consumption of the network device, improve the availability of network energy saving, and further reduce the complexity of terminal implementation.

FIG. 2A is an interactive schematic diagram showing an information transmission method according to an embodiment of the present disclosure. As shown in FIG. 2A, embodiments of the present disclosure relate to the information transmission method, which includes the following steps.

In step S2101, a network device 102 determines that a transmission state of an on demand signal needs to be changed.

In some embodiments, the on demand signal refers to a signal that needs to be transmitted based on an existing configuration, but the network device determines not to transmit for a period of time based on service conditions, power consumption, and other factors.

In some embodiments, the on demand signal may include, but is not limited to, at least one of: a second SSB; a system message; or an RACH.

The second SSB refers to a periodically transmitted SSB. The system message may include, but is not limited to, SIBn, where n may be a positive integer, for example, SIB1.

In some embodiments, the network device 102 may determine that the transmission state of the on demand signal needs to be changed based on the service conditions, the power consumption, etc., and a transmission state the on demand signal after change may be stop transmission or transmission.

In step S2102, the network device 102 determines a resource position where a first signal is located.

In some embodiments, the first signal may indicate that the transmission state of the on demand signal changes.

In some embodiments, the first signal may include, but is not limited to, any one of:
a first reference signal;
a simplify SSB; and
a first SSB.

In one example, the first reference signal may include, but is not limited to, any one of:
a CRS; and
a CSI-RS.

The CSI-RS may include, but is not limited to, a tracking reference signal (TRS).

For example, the TRS is a TRS configured for cell activation/de-activation.

For example, the TRS is a TRS configured based on configuration information, such as SCellActivationRS-Config sent by the network device.

In one example, the simplified SSB is a signal formed by simplifying an SSB.

For example, the simplified SSB may be a portion of signals included in the SSB of a cell where a terminal is located.

The simplified SSB may include one or two of: a PSS, an SSS, and a PBCH.

For example, the simplified SSB may include any one of: the PSS; the SSS; the PBCH; the PSS and the SSS; the PSS and the PBCH; and the SSS and the PBCH.

In one example, the first SSB may be a dedicated signal, i.e. only indicating the transmission state of the on demand signal.

For example, the first SSB may be an NCD-SSB. The NCD-SSB may be one SSB that is not associated with CORESET#0, such as a last SSB in a burst.

For example, the first SSB may be a CD-SSB.

The above content is only an illustrative example. A first signal configured to determine that the transmission state of the on demand signal changes or to indicate a changed transmission state of the on demand signal should be within the protection scope of the present disclosure.

In some embodiments, the first signal may indicate at least one of:
stopping transmitting one or more of on demand signals;
transmitting one or more of the on demand signals; or
an ACK message, configured to respond to a request message and acknowledge a transmission of one or more of the on demand signals, in which the request message is configured to request the transmission of one or more of the on demand signals.

The on demand signal includes at least one of: the second SSB, the system message, or the RACH.

For example, the first signal may indicate at least one of:
stopping transmitting the second SSB; stopping transmitting the system message; stopping transmitting the RACH; stopping transmitting the second SSB and the system message; stopping transmitting the second SSB and the RACH; stopping transmitting the system message and the RACH; or stopping transmitting the second SSB, the system message, and the RACH;
transmitting the second SSB; transmitting the system message; transmitting the RACH; transmitting the second SSB and the system message; transmitting the second SSB and the RACH; transmitting the system message and the RACH; or transmitting the second SSB, the system message, and the RACH;
a first ACK message, configured to respond to a first request message and acknowledge a transmission of the second SSB, in which the first request message is configured to request the transmission of the second SSB;
a second ACK message, configured to respond to a second request message and acknowledge a transmission of the system message, in which the second request message is configured to request the transmission of the system message;
a third ACK message, configured to respond to a third request message and acknowledge a transmission of the RACH, in which the third request message is configured to request the transmission of the RACH;
a fourth ACK message, configured to respond to a fourth request message and acknowledge a transmission of the second SSB and system message, in which the fourth request message is configured to request the transmission of the second SSB and system message;
a fifth ACK message, configured to respond to a fifth request message and acknowledge a transmission of the second SSB and RACH, in which the fifth request message is configured to request the transmission of the second SSB and RACH;
a sixth ACK message, configured to respond to a sixth request message and acknowledge a transmission of the system message and RACH, in which the sixth request message is configured to request the transmission of the system message and RACH; or
a seventh ACK message, configured to respond to a seventh request message and acknowledge a transmission of the second SSB, system message and RACH, in which the seventh request message is configured to request the transmission of the second SSB, system message and RACH.

The above content is only an illustrative example, and a content related to the transmission state of the on demand signal indicated by the first signal should fall within the protection scope of the present disclosure.

In some embodiments, the network device 102 may determine the resource position where the first signal is located based on a predefined manner, and the predefined manner may be a manner agreed upon by a protocol.

In one example, the network device 102 may determine a time-domain parameter and a frequency-domain parameter of the first signal based on the predefined manner.

For example, the time-domain parameter may include, but is not limited to, at least one of: a period duration; a time unit located; or a time unit offset.

The time unit may be in units of a frame, a slot, a symbol, a span, etc., which is not limited herein. One span includes one or more consecutive symbols within one slot.

The time unit offset may be an offset of a starting time unit of the first signal relative to a starting time unit of this period.

For example, the frequency domain parameter may include, but is not limited to, at least one of: a starting RB; a quantity of RBs occupied; or a signal pattern.

In some embodiments, the network device 102 may configure the resource position where the first signal is located for the terminal 101.

In one example, the network device 102 may configure the time-domain parameter and the frequency-domain parameter of the first signal for the terminal 101.

For example, the time-domain parameter may include, but is not limited to, at least one of: the period duration; the time unit located; or the time unit offset.

For example, the frequency domain parameter may include, but is not limited to, at least one of: the starting RB; the quantity of RBs occupied; or the signal pattern.

For example, the network device 102 may configure at least one of the time-domain parameter or the frequency-domain parameter of the first signal for the terminal 101 via a first RRC signaling.

For example, the network device may configure a time-frequency domain resource of the first signal for the terminal 101 based on at least one of:
a downlink carrier bandwidth (carrierBandwidthDL);
a downlink carrier frequency (carrierFreqDL);
a multicast/broadcast single frequency network-subframe configuration list (mbsfn-SubframeConfigList);
a frequency domain position; or
a time domain position.

In some embodiments, the network device 102 may configure the resource position where the first signal is located based on the predefined manner and the first RRC signaling.

In one example, the network device 102 may determine a plurality of patterns of the first signal based on the predefined manner. Further, the network device 102 may configure a first pattern used by the first signal via the first RRC signaling. The first pattern may be one of the plurality of patterns described above.

In some embodiments, the network device 102 may determine a sequence of the first signal based on the predefined manner.

For example, the first signal corresponds to a plurality of sequences, and the network device 102 may determine one sequence corresponding to the first signal from the plurality of sequences based on the predefined manner.

In some embodiments, the network device 102 may configure the sequence of the first signal via a second RRC signaling. The second RRC signaling may be an RRC signaling same as or different from the first RRC signaling, which is not limited herein.

For example, the network device 102 may configure the sequence of the first signal via at least one of:
a quantity of CRS antenna ports, for example, nrofCRS-Ports;
a CRS resource element (RE) offset, for example, v-Shift;
a timing extraction offset (TA-offset);
a cell identifier (ID); or
an initial value of the sequence, cᵢₙᵢₜ.

In some embodiments, the network device 102 may first determine the plurality of sequences corresponding to the first signal based on the predefined manner, and then configure one sequence of the first signal via the second RRC signaling.

In some embodiments, the compatibility between the first signal and a legacy scheme also needs to be considered.

In one example, in a case where the first signal is the CRS, the terminal may determine a time-frequency domain resource of the CRS and a corresponding CRS sequence based on a configuration, and the network device 102 may send the CRS to the terminal 101 in an NR system. At this time, the CRS indicates that the transmission state of the on demand signal changes.

In one example, in a case where the first signal is the simplified SSB, and in a case where the network device 102 sends the simplified SSB to the terminal 101, the simplified SSB indicates, at this time, that the transmission state of the on demand signal changes.

In one example, in a case where the first signal is the first SSB, and the first SSB is a dedicated SSB, the network device 102 may send the first SSB to the terminal 101. The first SSB only indicates that the transmission state of the on demand signal changes.

In one example, in a case where the first signal is the CSI-RS, the network device 102 may, at this time, distinguish itself from the legacy scheme in the following manners.

In a first manner, the network device 102 configures at least one of: a quantity of time units occupied by the CSI-RS, a quantity of RBs occupied by the CSI-RS, or a first pattern used by the CSI-RS based on the predefined manner.

For example, the network device 102 may configure that the quantity of time units occupied by the CSI-RS equals to a first value.

For example, the network device 102 may configure that the quantity of RBs occupied by the CSI-RS equals to a second value.

For example, the network device 102 may configure that the first pattern used by the CSI-RS is one of specified patterns.

For example, the network device 102 may configure the quantity of time units occupied by the CSI-RS to be equal to the first value, and/or configure the quantity of RBs occupied by the CSI-RS to be equal to the second value, and/or configure the first pattern used by the CSI-RS to be one of the specified patterns.

In a second manner, the network device 102 sends indication information to the terminal 101.

The indication information indicates that the CSI-RS indicates that the transmission state of the on demand signal changes.

In step S2103, the terminal 101 determines the resource position where the first signal is located.

In some embodiments, the terminal 101 may determine the resource position where the first signal is located based on the predefined manner.

In some embodiments, the terminal 101 may determine the resource position where the first signal is located based on a configuration of the network device 102.

In some embodiments, the terminal 101 may determine the resource position where the first signal is located based on the predefined manner and the configuration of the network device 102.

A determination manner of the resource position is similar to the determination manner of the resource position by the network device 102 in step S2102, which is not repeated here.

In some embodiments, the terminal 101 may further determine a specific sequence corresponding to the first signal, and a determination method is similar to that of the network device 102 in determining the sequence corresponding to the first signal, which is also not repeated here.

In step S2104, the network device 102 sends the first signal to the terminal 101.

In some embodiments, in a case where the network device 102 determines to stop transmitting one or more of the on demand signals, the network device 102 may send the first signal to the terminal 101.

In some embodiments, in a case where the network device 102 determines to transmit one or more of the on demand signals, the network device 102 may send the first signal to the terminal 101.

In some embodiments, the network device 102 receives a request message sent by the terminal 101, the request message is configured to request the transmission of one or more of the on demand signals. Further, the network device 102 sends the first signal to the terminal 101 based on the request message.

In one example, the request message may reuse a wake up signal (WUS). Based on the WUS received, the network device 102 sends the first signal to the terminal 101.

In some embodiments, the network device 102 may send the first signal to the terminal 101 at the resource position determined.

In some embodiments, the terminal 101 attempts to receive the first signal at the resource position.

In some embodiments, the terminal 101 attempts to receive the first signal within a first time window.

In some embodiments, the terminal 101 may determine a starting time unit of the first time window using any one of the following manners.

In one example, the terminal 101 determines the time unit where the first RRC signaling is located as the starting time unit of the first time window.

In one example, the terminal 101 determines a starting time unit of a current SSB period configured by the first RRC signaling as the starting time unit of the first time window.

In one example, the terminal 101 determines a starting time unit of a current SIB1 period configured by the first RRC signaling as the starting time unit of the first time window.

The first RRC signaling is an RRC signaling that configures the resource position where the first signal is located.

In one example, the terminal 101 determines a starting time unit of a next SSB period configured by the first RRC signaling as the starting time unit of the first time window.

In one example, the terminal 101 determines a starting time unit of a next SIB1 period configured by the first RRC signaling as the starting time unit of the first time window.

In one example, the terminal 101 determines a starting time unit of a DCI period corresponding to a next blind detection SIB1 configured by the first RRC signaling as the starting time unit of the first time window.

The first RRC signaling is the RRC signaling that configures the resource position where the first signal is located.

In one example, the terminal 101 determines a starting time unit of a period of a next common search space (CSS) of a first type where the first RRC signaling is located as the starting time unit of the first time window. The first type may be type 0.

In addition, the terminal 101 may determine a size of the first time window using any one of the following manners.

In one example, the terminal 101 may determine P1 SSB periods as the size of the first time window, where P1 is a positive integer. Each SSB period may be configured based on an RRC signaling (the first RRC signaling) sent by the network device, or may be a default period, such as 20 milliseconds.

In one example, the terminal 101 may determine blind detection periods corresponding to P2 CSSs of the first type as the size of the first time window, where P2 is a positive integer. Each blind detection period may be configured based on an RRC signaling (the first RRC signaling) sent by the network device, or may be a default period, such as 20 milliseconds.

In one example, the terminal 101 may determine P3 consecutive time units as the size of the first time window, where P3 is a positive integer. The time unit may be in units of a frame, a slot, a symbol, a subframe, a span, etc., which is not limited herein.

The above content is only an illustrative example, and the present disclosure does not limit a scheme by which the terminal 101 determines the first time window.

In step S2105, in respond to successfully receiving the first signal, the terminal 101 determines, based on the first signal, that the transmission state of the on demand signal changes.

In some embodiments, the first signal is the CRS. Since the CRS is a signal in an LTE system, in a case where the terminal 101 receives the CRS in the NR system, the terminal 101 may directly determine that the CRS indicates that the transmission state of the on demand signal changes.

In some embodiments, in a case where the first signal is the simplified SSB, the terminal 101 may determine that the simplified SSB indicates that the transmission state of the on demand signal changes.

In some embodiments, in a case where the first signal is the first SSB, the terminal 101 may determine that the first SSB indicates that the transmission state of the on demand signal changes.

In some embodiments, in a case where the first signal is the CSI-RS, such as the TRS, the terminal 101 may determine that the CSI-RS indicates that the transmission state of the on demand signal changes using any one of the following manners.

In a first manner, it is determined that the CSI-RS indicates that the transmission state of the on demand signal changes based on the predefined manner.

In one example, in a case where the terminal 101 determines that the quantity of time units occupied by the CSI-RS is equal to the first value, and/or the quantity of RBs occupied by the CSI-RS is equal to the second value, and/or the first pattern used by the CSI-RS is one of the specified patterns, the terminal 101 may determine that the CSI-RS indicates that the transmission state of the on demand signal changes.

In a second manner, the terminal 101 determines that the CSI-RS indicates that the transmission state of the on demand signal changes based on the indication information sent by the network device.

In one example, the network device 102 sends the indication information to indicate, via an explicit manner, that the CSI-RS indicates that the transmission state of the on demand signal changes.

In some embodiments, for example, in a case where the CSI-RS is the TRS, the TRS is a TRS configured by SCellActivationRS-Config, and corresponding medium access control element (MAC CE) enhanced Scell activation/deactivation indicates that the TRS configured by SCellActivationRS-Config is in an active state, the terminal 101 determines that the network device 102 continues to transmit one or more of the on demand signals.

For example, in a case where the TRS is the TRS configured by SCellActivationRS-Config, and the corresponding MAC CE enhanced Scell activation/deactivation indicates that the TRS configured by SCellActivationRS-Config is in a deactivated state, the terminal 101 determines that the transmission state of the on demand signal changes. At this time, the terminal 101 determines that the network device 102 stops transmitting one or more of the on demand signals.

For example, the transmission state of the on demand signal is determined based on an MAC CE indication.

For example, in a case where the corresponding MAC CE enhanced Scell activation/deactivation indicates that an SCell is in the active state, the terminal 101 determines that the transmission state of the on demand signal changes, and at this time, the terminal 101 determines that the network device 102 continues to transmit one or more of the on demand signals.

For example, in a case where the corresponding MAC CE enhanced Scell activation/deactivation indicates that the SCell is in the deactive state, the terminal 101 determines that the transmission state of the on demand signal changes, and at this time, the terminal 101 determines that the network device 102 stops transmitting one or more of the on demand signals.

The above content is only an illustrative example, and the terminal 101 may determine, based on other manners, that the CSI-RS indicates that the transmission state of the on demand signal changes.

In step S2106, the network device 102 performs a corresponding operation.

In some embodiments, the first signal indicates abandoning the transmission of one or more of the on demand signals, and the network device 102 no longer sends and/or receives one or more of the on demand signals.

For example, in a case where the first signal indicates abandoning a transmission of one or more of the second SSB, the system message, and the RACH, the network device 102 no longer sends one or more of the second SSB and the system message, and/or the network device 102 no longer receives the RACH.

For example, in a case where the first signal indicates to transmit one or more of: the second SSB, the system message, and the RACH, the network device 102 starts transmitting the second SSB and/or the system message, and/or the network device 102 starts receiving the RACH.

For example, the first signal indicates the ACK message, and the network device 102 starts transmitting the second SSB and/or the system message, and/or the network device 102 starts receiving the RACH. The ACK message is configured to respond to the request message and acknowledge the transmission of one or more of the on demand signals, and the request message is configured to request the transmission of one or more of the on demand signals.

In step S2107, the terminal 101 performs the corresponding operation.

In some embodiments, the first signal indicates abandoning the transmission of one or more of the on demand signals, and the terminal 101 no longer receives and/or sends one or more of the on demand signals.

For example, in a case where the first signal indicates abandoning the transmission of one or more of the second SSB, the system message, and the RACH, the terminal 101 no longer receives one or more of the second SSB and the system message, and/or the terminal 101 no longer sends the RACH.

For example, in a case where the first signal indicates the transmission of one or more of the second SSB, the system message, and the RACH, the terminal 101 starts receiving the second SSB and/or the system message, and/or the terminal 101 starts transmitting the RACH.

For example, the first signal indicates the ACK message, the terminal 101 starts receiving the second SSB and/or the system message, and/or the terminal 101 starts transmitting the RACH. The ACK message is configured to respond to the request message and acknowledge the transmission of one or more of the on demand signals, and the request message is configured to request the transmission of one or more of the on demand signals.

In some embodiments, names are not limited to those specified in the embodiments. The terms such as "information", "message", "signal", "signaling", "report", "configuration", "indication", "instruction", "command", "channel", "parameter", "domain", "field", "symbol", "symbol/code element", "codebook", "codeword", "codepoint", "bit", "data", "program", "chip", etc., may be used interchangeably.

In some embodiments, the terms such as "uplink", "physical uplink", etc. may be used interchangeably.

In some embodiments, the terms such as "downlink", "physical downlink", etc. may be used interchangeably.

In some embodiments, the terms such as "send", "transmit", "report", "deliver", "transmit", "bidirectional transmission", "send and/or receive" may be used interchangeably.

In some embodiments, the terms such as "acquire", "obtain", "get", "receive", "transmit", "bidirectional transmission", "send and/or receive" may be used interchangeably, and they may be interpreted as receiving from another entity, obtaining from a protocol, obtaining from a high layer, obtaining via processing by itself, autonomously implementing, and other meanings.

In some embodiments, terms such as "certain", "predetermined", "preset", "set", "indicated", "a/an", "any", "first", "specified", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

In some embodiments, the information transmission method involved in embodiments of the present disclosure may include at least one of steps S2101 to S2107. For example, step S2101 may be implemented as an independent embodiment, step S2102 may be implemented as an independent embodiment, step S2103 may be implemented as an independent embodiment, steps S2101 + S2102 + S2103 may be implemented as an independent embodiment, step S2104 may be implemented as an independent embodiment, step S2105 may be implemented as an independent embodiment, steps S2106 + S2107 may be implemented as an independent embodiment, and steps S2101 to S2107 may be implemented as an independent embodiment, which is not limited herein.

In some embodiments, step S2101 is optional, and one or more of these steps may be omitted or substituted in different embodiments. For example, in a case where the network device 102 determines that the transmission state of the on demand signal not needs to be changed, step S2101 may not be executed.

In some embodiments, step S2104 is optional, and one or more of these steps may be omitted or substituted in different embodiments. For example, in a case where the terminal 101 receives the first signal sent by other execution entities, step S2104 may not be executed.

In some embodiments, step S2105 is optional, and one or more of these steps may be omitted or substituted in different embodiments. For example, in a case where the terminal 101 determines that the transmission state of the on demand signal changes based on the predefined manner, step S2105 may not be executed.

In some embodiments, steps S2106 and S2107 may be executed in an exchanged order.

In some embodiments, steps S2101 to S2107 are optional, and one or more of these steps may be omitted or substituted in different embodiments.

In the above embodiments, the terminal may determine the resource position where the first signal is located, and may determine the transmission state of the on demand signal based on the first signal, thereby reducing the energy consumption of the network device, improving the availability of network energy saving, and further reducing the complexity of terminal implementation.

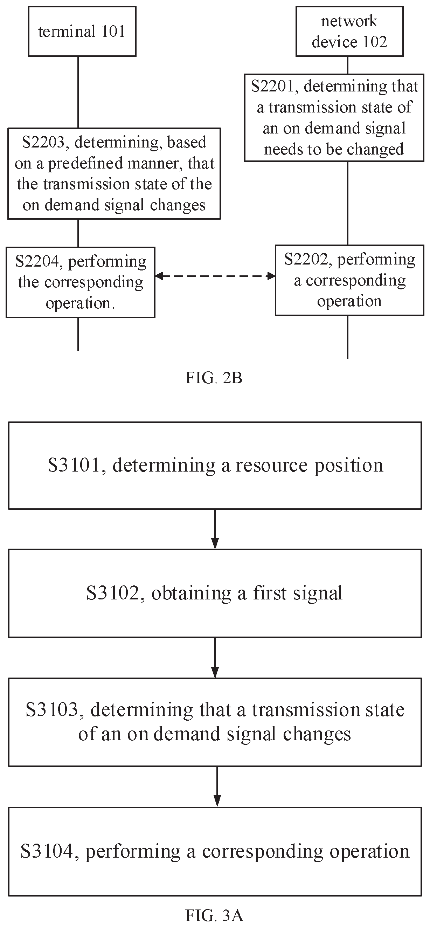

FIG. 2B is an interactive schematic diagram showing an information transmission method according to an embodiment of the present disclosure. As shown in FIG. 2B, embodiments of the present disclosure relate to the information transmission method, which includes the following steps.

In step S2201, a network device 102 determines that a transmission state of an on demand signal needs to be changed.

An implementation manner is similar to step S2101 above, which is not repeated here.

In step S2202, the network device 102 performs a corresponding operation.

In some embodiments, the network device 102 stops transmitting and/or stops receiving one or more of on demand signals.

In some embodiments, the network device 102 starts transmitting and/or starts receiving one or more of on demand signals.

In step S2203, a terminal 101 determines, based on a predefined manner, that the transmission state of the on demand signal changes.

In some embodiments, in a case where the terminal 101 does not receive at least one of a second SSB or a system message sent by the network device 102 for N consecutive periods, the terminal 101 determines that the transmission state of the on demand signal changes, where N is a positive integer.

In some embodiments, in a case where the terminal 101 does not receive message 2 sent by the network device 102 after continuously transmitting M RACHs, the terminal 101 determines that the transmission state of the on demand signal changes, where M is a positive integer.

In some embodiments, in response to an arrival of a starting time point and/or ending time point of a first time period, the terminal 101 determines that the transmission state of the on demand signal changes.

For example, the first time period may be a time period preconfigured by the network device 102 to stop transmitting the on demand signal. It is assumed that the first time period is 0:00 to 4:00, the terminal 101 determines, at 0:00 every day, that the transmission state of the on demand signal changes, and the transmission state of the on demand signal after the change is stopping transmission. The terminal 101 determines, at 4:00 AM every day, that the transmission state of the on demand signal changes, and the transmission state of the on demand signal after the change is transmission.

In some embodiments, in response to an arrival of a starting time point and/or ending time point of a second time period, the terminal 101 determines that the transmission state of the on demand signal changes.

For example, the second time period may be a time period pre-configured by the network device 102 to transmit the on demand signal. It is assumed that the second time period is 4:00 to 24:00, the terminal 101 determines, at 4:00 every day, that the transmission state of the on demand signal changes, and the transmission state of the on demand signal after the change is transmission. The terminal 101 determines, at 24:00 every day, that the transmission state of the on demand signal changes, and the transmission state of the on demand signal after the change is stopping transmission.

The above content is only an illustrative example, and a scheme by which the terminal 101 determines that the transmission state of the on demand signal changes based on the predefined manner should fall within the protection scope of the present disclosure.

In step S2204, the terminal 101 performs the corresponding operation. In some embodiments, in order to maintain a consistent understanding with the network device 102, the terminal 101 may stop receiving and/or stop transmitting one or more of the on demand signals.

In some embodiments, the information transmission method involved in embodiments of the present disclosure may include at least one of steps S2201 to S2204. For example, step S2201 may be implemented as an independent embodiment, step S2202 may be implemented as an independent embodiment, step S2203 may be implemented as an independent embodiment, steps S2101 + S2102 + S2103 may be implemented as an independent embodiment, step S2204 may be implemented as an independent embodiment, and steps S2201 to S2204 may be implemented as an independent embodiment, which is not limited herein.

In some embodiments, step S2201 is optional, and one or more of these steps may be omitted or substituted in different embodiments. For example, in a case where the network device 102 determines that the transmission state of the on demand signal not needs to be changed, step S2101 may not be executed.

In some embodiments, step S2203 is optional, and one or more of these steps may be omitted or substituted in different embodiments. For example, in a case where the terminal 101 determines that the transmission state of the on demand signal changes based on the first signal, step S2203 may not be executed.

In some embodiments, steps S2201 to S2204 are optional, and one or more of these steps may be omitted or substituted in different embodiments.

In the above embodiments, the terminal may determine that the transmission state of the on demand signal changes based on the predefined manner, which reduces the energy consumption of the network device, improves the availability of network energy saving, and further reduces the complexity of terminal implementation.

FIG. 3A is an interactive schematic diagram showing an information transmission method according to an embodiment of the present disclosure. As shown in FIG. 3A, embodiments of the present disclosure relate to the information transmission method, which may be performed by a terminal 101, and includes the following steps.

In step S3101, a resource position is determined.

In some embodiments, for an optional implementation of step S3101, reference may be made to the optional implementation of step S2103 in FIG. 2A and other related parts in the embodiments involved in FIG. 2A, which are not repeated here.

In step S3102, a first signal is obtained.

In some embodiments, the terminal 101 may obtain the first signal from a network device 102, and may also receive the first signal sent by other entities/devices, which is not limited herein.

In some embodiments, the terminal 101 obtains the first signal determined according to a predefined rule.

In some embodiments, the terminal 101 obtains the first signal by information processing.

In some embodiments, step S3102 is omitted, and the terminal 101 autonomously implements the function indicated by the first signal, or the terminal 101 obtains the first signal based on the predefined rule or a protocol agreement, or the above function is omitted or set by default.

In some embodiments, for an optional implementation of step S3102, reference may be made to the optional implementation of step S2104 in FIG. 2A and other related parts in the embodiments involved in FIG. 2A, which are not repeated here.

In step S3103, it is determined that a transmission state of an on demand signal changes.

In some embodiments, for an optional implementation of step S3103, reference may be made to the optional implementation of step S2105 in FIG. 2A and other related parts in the embodiments involved in FIG. 2A, which are not repeated here.

In step S3104, a corresponding operation is performed.

In some embodiments, for an optional implementation of step S3104, reference may be made to the optional implementation of step S2107 in FIG. 2A and other related parts in the embodiments involved in FIG. 2A, which are not repeated here.

In some embodiments, steps S3101 to S3104 are optional, and one or more of these steps may be omitted or substituted in different embodiments.

In the above embodiments, the terminal may determine that the transmission state of the on demand signal changes based on the first signal sent by the network device, which reduces the energy consumption of the network device, improves the availability of network energy saving, and further reduces the complexity of terminal implementation.

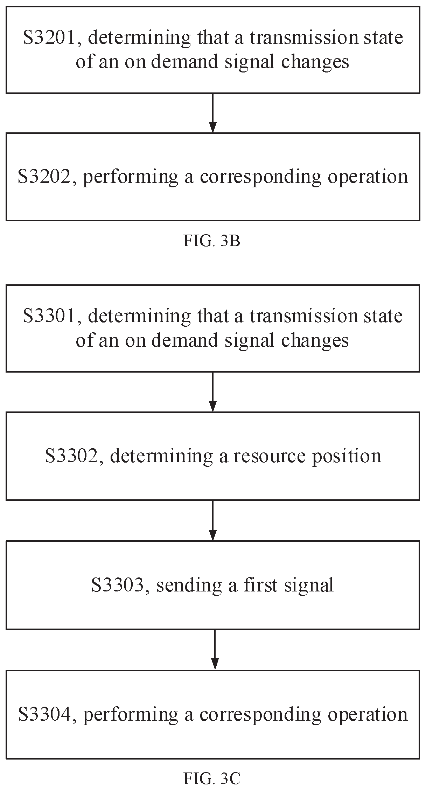

FIG. 3B is an interactive schematic diagram showing an information transmission method according to an embodiment of the present disclosure. As shown in FIG. 3B, embodiments of the present disclosure relate to the information transmission method, which may be performed by a terminal 101, and includes the following steps.

In step S3201, it is determined that a transmission state of an on demand signal changes.

In some embodiments, for an optional implementation of step S3201, reference may be made to the optional implementation of step S2203 in FIG. 2B and other related parts in the embodiments involved in FIG. 2B, which are not repeated here.

In step S3202, a corresponding operation is performed.

In some embodiments, for an optional implementation of step S3202, reference may be made to the optional implementation of step S2204 in FIG. 2B and other related parts in the embodiments involved in FIG. 2B, which are not repeated here.

In some embodiments, steps S3201 to S3202 are optional, and one or more of these steps may be omitted or substituted in different embodiments.

In the above embodiments, the terminal may determine that the transmission state of the on demand signal changes based on a predefined manner, which reduces the energy consumption of the network device, improves the availability of network energy saving, and further reduces the complexity of terminal implementation.

FIG. 3C is an interactive schematic diagram showing an information transmission method according to an embodiment of the present disclosure. As shown in FIG. 3C, embodiments of the present disclosure relate to the information transmission method, which may be performed by a network device 102, and includes the following steps.

In step S3301, it is determined that a transmission state of an on demand signal changes.

In some embodiments, for an optional implementation of step S3301, reference may be made to the optional implementation of step S2101 in FIG. 2A and other related parts in the embodiments involved in FIG. 2A, which are not repeated here.

In step S3302, a resource position is determined.

In some embodiments, for an optional implementation of step S3302, reference may be made to the optional implementation of step S2102 in FIG. 2A and other related parts in the embodiments involved in FIG. 2A, which are not repeated here.

In step S3303, a first signal is sent.

In some embodiments, the network device 102 sends the first signal to a terminal 101.

In some embodiments, the terminal 101 receives the first signal.

In some embodiments, for an optional implementation of step S3303, reference may be made to the optional implementation of step S2104 in FIG. 2A and other related parts in the embodiments involved in FIG. 2A, which are not repeated here.

In step S3304, a corresponding operation is performed.

In some embodiments, for an optional implementation of step S3304, reference may be made to the optional implementation of step S2106 in FIG. 2A and other related parts in the embodiments involved in FIG. 2A, which are not repeated here.

In some embodiments, steps S3301 to S3306 are optional, and one or more of these steps may be omitted or substituted in different embodiments.

In the above embodiments, the network device may send the first signal to the terminal to inform the terminal that the transmission state of the on demand signal changes, thereby reducing the energy consumption of the network device, improving the availability of network energy saving, ensuring that the terminal and the network device have a consistent understanding of the transmission state of the on demand signal, and further reducing the complexity of terminal implementation.

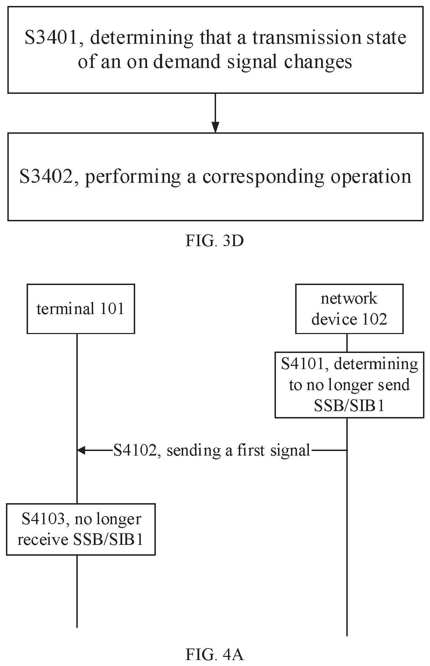

FIG. 3D is an interactive schematic diagram showing an information transmission method according to an embodiment of the present disclosure. As shown in FIG. 3D, embodiments of the present disclosure relate to the information transmission method, which may be performed by a network device 102, and include the following steps.

In step S3401, it is determined that a transmission state of an on demand signal changes.

In some embodiments, for an optional implementation of step S3401, reference may be made to the optional implementation of step S2201 in FIG. 2B and other related parts in the embodiments involved in FIG. 2B, which are not repeated here.

In step S3402, a corresponding operation is performed.

In some embodiments, for an optional implementation of step S3402, reference may be made to the optional implementation of step S2202 in FIG. 2B and other related parts in the embodiments involved in FIG. 2B, which are not repeated here.

In some embodiments, steps S3401 to S3402 are optional, and one or more of these steps may be omitted or substituted in different embodiments.

In the above embodiments, the energy consumption of the network device is reduced, the availability of network energy saving is improved, and it may be ensured that the terminal and network devices have the consistent understanding of the transmission state of the on demand signal.

The above process may be further illustrated with the following examples:

### Terminal side:

A terminal supporting a network power saving technology determines a corresponding transmission state of an on demand signal by receiving the following reference signals.

In scheme 1, the terminal receives a CRS to determine the transmission state of the on demand signal.

In one example, the terminal determines a time-frequency domain resource for receiving the CRS based on a signaling configuration or a predefined manner:

For example, a time domain parameter includes: a period, a time unit (e.g., frame, slot, symbol, etc.) located, and a time unit offset.

For example, a frequency domain parameter includes: a starting RB, a quantity of RBs occupied, a signal pattern, etc.

For example, the terminal determines the time-frequency domain resource based on an existing configuration: carrierBandwidthDL, carrierFreqDL, and mbsfn-SubframeConfigList.

For example, the terminal determines a plurality of patterns corresponding to the CRS based on the predefined manner, and determines one of the plurality of patterns via a first RRC signaling received.

In one example, the terminal determines a sequence of the CRS received based on the signaling configuration or the predefined manner.

For example, the terminal determines the sequence of the CRS based on the following configuration parameters: nrofCRS-Ports, v-Shift, TA-offset, LTE Cell ID, an initial value of a sequence, cᵢₙᵢₜ, etc.

For example, the terminal determines the plurality of patterns corresponding to the CRS based on the predefined manner, determines one of the plurality of patterns by receiving a signaling, and determines the sequence corresponding to the CRS based on the pattern corresponding to the CRS.

The terminal attempts to receive a corresponding CRS sequence based on the above time-frequency domain resource, and in a case where the terminal successfully receives the above CRS sequence, the terminal determines the transmission state of the corresponding on demand signal.

In scheme 2, the terminal receives a simplified SSB signal to determine the transmission state of the on demand signal.

In one example, the terminal determines a time-frequency domain resource for receiving the simplified SSB based on the signaling configuration or the predefined manner.

For example, a time domain parameter includes: the period, the time unit (e.g., frame, slot, symbol, etc.) located, and a time unit offset.

For example, a frequency domain parameter includes: the starting RB, the quantity of RBs occupied, the signal pattern, etc.

In one example, the terminal determines a sequence of the simplified SSB received based on the signaling configuration or the predefined manner.

The simplified SSB is one or two of a PSS signal, an SSS signal, and a PBCH corresponding to an SSB of this cell.

The terminal attempts to receive a corresponding simplified SSB sequence based on the above time-frequency domain resource, and in a case where the terminal successfully receives the above simplified SSB sequence, the terminal determines the transmission state of the corresponding on demand signal.

In scheme 3, the terminal receives a specific SSB (first SSB) to determine the transmission state of the on demand signal.

In one example, the terminal determines a time-frequency domain resource for receiving the SSB based on the signaling configuration or the predefined manner.

For example, the SSB is an NCD-SSB, for example, an SSB that is not associated with CORESET#0, for another example, corresponds to a last SSB in a burst.

For example, the terminal determines that the first SSB is only used as an indication of the transmission state of the on demand signal.

The terminal attempts to receive a corresponding first SSB sequence based on the above time-frequency domain resource, and in a case where the terminal successfully receives the above first SSB sequence, the terminal determines the transmission state of the corresponding on demand signal.

In scheme 4, the terminal receives a CSI-RS (e.g., TRS) to determine the transmission state of the on demand signal.

In one example, the terminal determines a time-frequency domain resource for receiving the TRS/CSI-RS based on the signaling configuration or the predefined manner.

For example, a time domain parameter includes: the period, the time unit (e.g., frame, slot, symbol, etc.) located, and the time unit offset.

For example, a frequency domain parameter includes: the starting RB, the quantity of RBs occupied, the signal pattern, etc.

For example, the quantity of RBs occupied by the TRS is equal to a second value, in which the second value is 24.

The terminal attempts to receive the corresponding TRS/CSI-RS signal based on the above time-frequency domain resource, and in a case where the terminal successfully receives a TRS/CSI-RS sequence, the terminal determines the corresponding transmission state of the on demand signal.

For example, the TRS is a TRS for cell activation/de-activation.

For example, the TRS is a TRS configured based on SCellActivationRS-Config.

For example, the TRS is a TRS configured by SCellActivationRS-Config, and in a case where corresponding MAC CE enhanced Scell activation/deactivation indicates that the TRS configured by SCellActivationRS-Config is in an active state, the terminal determines that the network device continues to transmit SSB/SIB1.

For example, the TRS is a TRS configured by SCellActivationRS-Config, and in a case where corresponding MAC CE enhanced Scell activation/deactivation indicates that the TRS configured by SCellActivationRS-Config is in a deactivated state, the terminal determines that the network device stops transmitting SSB/SIB1.

For example, the transmission state of the on demand signal is determined based on an MAC CE indication.

For example, in a case where corresponding MAC CE enhanced Scell activation/deactivation indicates that an SCell is in an active state, the terminal determines that a network side continues to transmit SSB/SIB1.

For example, in a case where corresponding MAC CE enhanced Scell activation/deactivation indicates that an SCell is in a deactive state, the terminal determines that the network side stops transmitting SSB/SIB1.

### Network device side:

In scheme 1, a network device sends a CRS to indicate a transmission state of an on demand signal.

In one example, the network device indicates a time-frequency domain resource for transmitting the CRS based on a signaling configuration or a predefined manner.

For example, a time domain parameter includes: a period, a time unit (e.g., frame, slot, symbol, etc.) located, and a time unit offset.

For example, a frequency domain parameter includes: a starting RB, a quantity of RBs occupied, a signal pattern, etc.

For example, the network device indicates the time-frequency domain resource based on an existing signaling parameter: carrierBandwidthDL, carrierFreqDL, and mbsfn-SubframeConfigList.

For example, the network device determines a plurality of patterns corresponding to the CRS based on the predefined manner, and configures one of the plurality of patterns via a signaling.

In one example, the network device determines a sequence of a CRS sent based on the signaling configuration or the predefined manner:

For example, the network device configures the sequence of the CRS based on the following configuration parameters: nrofCRS-Ports, v-Shift, TA-offset, LTE Cell ID, an initial value of a sequence, cᵢₙᵢₜ, etc.

For example, the network device determines a plurality of patterns corresponding to the CRS based on the predefined manner, and configures one of the plurality of patterns via an RRC signaling.

The network device sends the corresponding CRS sequence based on the above time-frequency domain resource to indicate that the transmission state of the on demand signal changes.

For example, in a case where the network device sends SIB1/SSB, it indicates a state switch for the SIB1/SSB by transmitting the CRS sequence, that is, stopping transmitting the SIB1/SSB.

For example, in a case where the network device stops transmitting SIB1/SSB, it indicates a state switch of the SIB1/SSB by transmitting the CRS sequence, that is, transmitting the SIB1/SSB.

In scheme 2, the network device sends a simplified SSB signal to indicate the transmission state of the on demand signal. In one example, the network device indicates a time-frequency domain resource for transmitting the simplified SSB based on the signaling configuration or the predefined manner.

For example, a time domain parameter includes: the period, the time unit (e.g., frame, slot, symbol, etc.) located, and the time unit offset.

For example, a frequency domain parameter includes: the starting RB, the quantity of RBs occupied, the signal pattern, etc.

In one example, the network device indicates a sequence of the simplified SSB sent based on the signaling configuration or the predefined manner.

The simplified SSB is one or two of a PSS signal, an SSS signal, and a PBCH corresponding to an SSB of this cell.

The network device sends a corresponding simplified SSB sequence based on the above time-frequency domain resource to indicate that the transmission state of the on demand signal changes.

For example, in a case where the network device sends SIB1/SSB, it indicates a state switch for the SIB1/SSB by transmitting the simplified SSB sequence, that is, stopping transmitting the SIB1/SSB.

For example, in a case where the network device stops transmitting SIB1/SSB, it indicates a state switch for the SIB1/SSB by transmitting a simplified SSB sequence, that is, transmitting the SIB1/SSB.

In scheme 3, the network device sends a specific SSB (first SSB) to indicate the transmission state of the on demand signal. In one example, the network device determines a time-frequency domain resource for transmitting the SSB based on the signaling configuration or the predefined manner.

For example, the SSB is an NCD-SSB, which corresponds to a last SSB in a burst.

For example, the network device determines that the first SSB is only used as an indication of the transmission state of the on demand signal.

The network device sends a corresponding SSB sequence based on the above time-frequency domain resource to indicate that the transmission state of the on demand signal changes.

For example, in a case where the network device sends SIB1/SSB, it indicates a state switch of the SIB1/SSB by transmitting the SSB sequence, that is, stopping transmitting the SIB1/SSB.

For example, in a case where the network device stops transmitting SIB1/SSB, it indicates a state switch of the SIB1/SSB by transmitting the SSB sequence, that is, transmitting the SIB1/SSB.

In scheme 4, the network device sends a TRS/CSI-RS signal to indicate the transmission state of the on demand signal. In one example, the network device determines a time-frequency domain resource for transmitting a TRS/CSI-RS based on the signaling configuration or the predefined manner:

For example, a time domain parameter includes: the period, the time unit (e.g., frame, slot, symbol, etc.) located, and the time unit offset.

For example, a frequency domain parameter includes: the starting RB, he quantity of RBs occupied, the signal pattern, etc.

For example, the quantity of RBs occupied by the TRS is equal to 24.

In one example, the network device sends a corresponding TRS/CSI-RS sequence based on the above time-frequency domain resource to indicate that the transmission state of the on demand signal changes.

For example, in a case where the network device sends SIB1/SSB, it indicates a state switch for the SIB1/SSB by transmitting a TRS/CSI-RS sequence, that is, stopping transmitting the SIB1/SSB.

For example, in a case where the network device stops transmitting SIB1/SSB, it indicates a state switch for the SIB1/SSB by transmitting a TRS/CSI-RS sequence, that is, transmitting the SIB1/SSB.

For example, the TRS is a TRS for cell activation/de-activation.

For example, the TRS is s TRS configured based on SCellActivationRS-Config.

For example, the TRS is a TRS configured by SCellActivationRS-Config, and in a case where corresponding MAC CE enhanced Scell activation/deactivation indicates that the TRS configured by SCellActivationRS-Config is in an active state, the network device continues to transmit the SSB/SIB1.

For example, the TRS is a TRS configured by SCellActivationRS-Config, and in a case where corresponding MAC CE enhanced Scell activation/deactivation indicates that the TRS configured by SCellActivationRS-Config is in a deactivated state, the terminal determines that the network device stops transmitting the SSB/SIB1.

For example, the transmission state of the on demand signal is determined based on an MAC CE indication.

For example, in a case where the corresponding MAC CE enhanced Scell activation/deactivation indicates that an SCell is in the active state, the network device continues to transmit the SSB/SIB1.

For example, in a case where the corresponding MAC CE enhanced Scell activation/deactivation indicates that an SCell is in the deactive state, the network device stops transmitting the SSB/SIB1.

The following may describe specific implementations of the present disclosure from perspectives of the network device and the terminal.

It is assumed that the terminal is a Rel-18 or later version terminal, and the terminal is a terminal supporting a network energy saving (NES) feature, and the network device is a network device supporting a NES technology. To support requirements of NES, considering that the network device may abandon transmitting corresponding system information, such as SSB/SIB1/SIBn, or abandon receiving a corresponding uplink signal, such as RACH, within a certain period of time, the terminal needs to abandon receiving the system information or transmitting the uplink signal based on a corresponding network side behavior.

In a case where the network device abandons transmitting a corresponding signal within the certain period of time, the information may be called the on demand signal. The scheme of the present disclosure uses SSB and SIB1 as examples to illustrate the scheme of embodiments of the present disclosure. Other information is also within the protection scope of the scheme of the present disclosure, which are not repeated here.

A transmission state indication of on-demand SSB/SIB involved in the scheme of the present disclosure includes at least one of:
not transmitting the SSB, and/or not transmitting the SIB1;
starting transmitting the SSB, and/or starting transmitting the SIB1; or
after the terminal sends a request message for SSB and/or SIB1 transmission, the indication signaling is an ACK message for restarting transmitting the SSB and/or the SIB1.

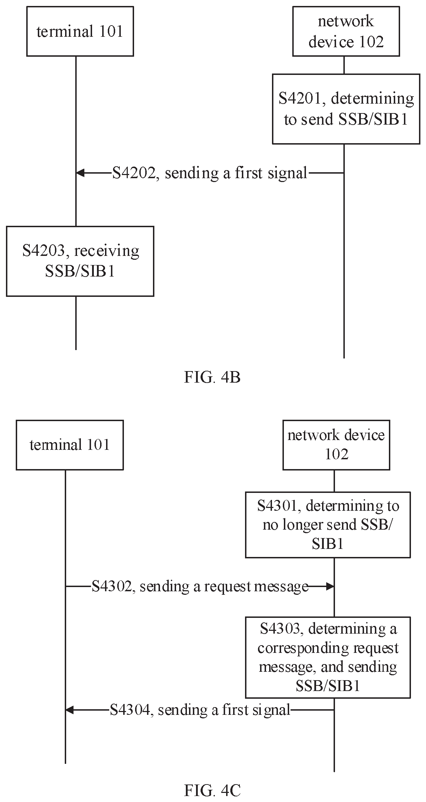

Based on above indication states, a corresponding implementation process may be shown in FIG. 4A, FIG. 4B, and FIG. 4C below.

In FIG. 4A, in a case where the network device determines to no longer send SSB/SIB1, the network device sends a first signal to the terminal, and the terminal determines to no longer receive the SSB/SIB1 based on the first signal.

In FIG. 4B, in a case where the network device determines to send SSB/SIB1, the network device sends a first signal to the terminal, and the terminal receives the SSB/SIB1 based on the first signal.

In FIG. 4C, the network device determines to no longer send SSB/SIB1, the terminal sends a request message to the network device, and the request message may be a WUS. Based on the request message, the network device determines to send the SSB/SIB1 and sends a first signal to the terminal, so that the terminal receives the SSB/SIB1 based on the first signal.

It is worth noting that FIG. 4A, FIG. 4B, and FIG. 4C are illustrative descriptions of application scenarios of the scheme of the present disclosure. Other application scenarios are also within the protection scope of the scheme of the present disclosure, which are not repeated herein.

For the above application scenarios, specific embodiments of the scheme of the present disclosure are as follows.

In embodiment 1, the terminal determines a transmission state of the on-demand SSB/SIB1 based on different first signals. For example, a correspondence between the first signals and the transmission states includes any one of:
a first signal 1 corresponding to no transmission of the SSB;
a first signal 2 corresponding to no transmission of the SIB1;
a first signal 3 corresponding to no transmission of the SSB and no transmission of the SIB1;
a first signal 4 corresponding to a transmission of the SSB;
a first signal 5 corresponding to a transmission of the SIB1;
a first signal 6 corresponding to a transmission of the SSB and no transmission of the SIB1;
a first signal 7 corresponding to an ACK message that triggers SSB request information;
a first signal 8 corresponding to an ACK message that triggers SIB1 request information; and
a first signal 9 corresponding to an ACK message that triggers SSB/SIB1 request information.

In embodiment 2, the terminal determines a transmission state of an on-demand SSB/SIB1 based on a predefined manner and a first signal.

For example, in a case where the terminal may periodically receive the SSB based on configuration information, and/or obtain valid SIB1 information based on scheduling information, and/or the terminal may receive the SSB and/or receive the SIB1 within a first time window, in a case where the terminal receives the first signal, the terminal determines to no longer receive corresponding SSB and/or SIB1 information.

For example, in a case where the terminal does not receive the SSB and/or receive the SIB1 within a first time window, or in a case where the terminal sends SSB/SIB1 request information, and the terminal receives the first signal, the terminal determines to continue to receive a corresponding SSB and/or SIB1 signal.

The first time window may be determined via a signaling configuration or a predefined manner. A time window corresponding to the SSB and a time window corresponding to the SIB1 may be same or different.

The first time window is determined based on one or more of:
the first time window taking a time when a first RRC signaling is transmitted as a starting position;
the first time window taking a starting position of a next SSB period where a first RRC signaling is located as a starting position;
the first time window taking a starting position of a next Type 0 CSS period where a first RRC signaling is located as a starting position;
a length of the first time window being equal to P1 SSB periods, in which the SSB period is configured based on a signaling or is a default period (20ms);
the first time window being equal to P2 blind detection periods corresponding to Type 0 CSS, in which the blind detection period is configured based on a signaling or is a default period (20ms); and
the first time window being equal to P3 time units, in which the time unit may be in units of a frame, a slot, a symbol, a subframe, etc.

In embodiment 3, the terminal determines a first time-domain resource position and/or a first frequency-domain resource position where a reference signal received is located based on a signaling configuration or the predefined manner. The position parameters specifically include at least one of:
the time-domain parameter including: a period, a time unit (e.g., frame, slot, symbol, etc.) located, and a time unit offset; or
the frequency domain parameter including: a starting RB, a quantity of RBs occupied, a signal pattern, etc.

Taking the predefined manner as an example for illustrative, the time position may be a signal transmitted fixed in a first slot of a first frame with a period of 160ms.

Taking the predefined manner as an example for illustrative, the frequency domain position may be lowest or highest S1 PRBs within a BWP, for example, S1 = 24.

Taking the predefined manner as an example for illustrative, the frequency domain position may be lowest or highest S2 PRBs within a frequency domain range occupied by an SSB, for example, S2 = 12.

Taking the predefined manner as an example for illustrative, the frequency domain position may be lowest or highest S3 PRBs within a frequency domain range occupied by CORESET#0, for example, S3 = 12.

Based on the time-frequency domain position, the terminal receives a corresponding first signal to determine the transmission state of the on demand signal. The first signal includes at least one of the following embodiments.

In embodiment 3.1, the first signal includes a CRS signal.

The network device sends the following configuration signaling to indicate a time-frequency domain position of a CRS and/or CRS sequence information, and the configuration information includes one or more of:
a quantity of PRBs occupied by the CRS, for example, carrierFreqDL;
a center frequency point corresponding to a carrier where the CRS is located, for example, carrierBandwidthDL;
an MBSFN subframe configuration, for example, mbsfn-SubframeConfigList;
a quantity of CRS ports, for example, nrofCRS-Ports;
an RE offset, for example, v-shift;
a cell ID, for example, cell-ID;
an initial parameter of a pseudo-random sequence, cint; and
CP information, for example, a normal cyclic prefix (NCP) and an extended cyclic prefix (ECP).

The terminal receives the above configuration information and, with reference to a CRS mechanism, determines a CRS transmission time-frequency domain pattern and/or CRS sequence, and receives a corresponding CRS at a first time domain position and/or a first frequency domain position.

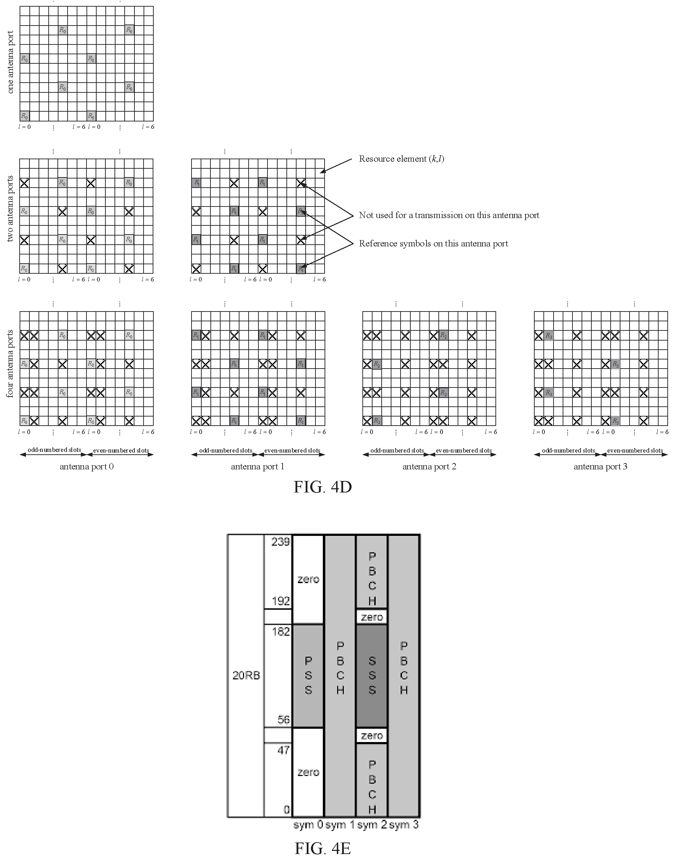

In embodiment 3.1.1, in one possible implementation, the terminal determines the CRS transmission time-frequency domain pattern based on an existing RRC signaling, such as RateMatchPatternLTE-CRS. Considering that the terminal cannot know CRS sequence information, the terminal blindly detects the corresponding CRS at the first time domain position and/or the first frequency domain position, or detects a received signal strength indication (RSSI). In a case where the RSSI exceeds a certain threshold, it is determined that the corresponding CRS sequence is received. The possible CRS patterns are shown, for example, in FIG. 4D.

In embodiment 3.1.2, in one possible implementation, the network device sends configuration information to indicate a first time domain position and/or a first frequency domain position where the CRS is possible to transmit. In a case where the network device determines to switch an on-demand SSB/SIB1 state, the network device sends a CRS signal to indicate a corresponding state switch. Based on the configuration information, the terminal attempts to receive the corresponding CRS at the first time domain position and/or the first frequency domain position. In a case where the CRS is successfully received, the terminal determines an on-demand SSB/SIB1 state switch.

The network device sends the corresponding CRS sequence based on the above time-frequency domain resource to indicate a switching of an on demand signal state.

For example, in a case where the network device sends the SIB1/SSB, it indicates a state switch for the SIB1/SSB by transmitting a CRS sequence, that is, stops transmitting the SIB1/SSB.

For example, in a case where the network device stops transmitting the SIB1/SSB, it indicates a state switch for the SIB1/SSB by transmitting a CRS sequence, that is, sends the SIB1/SSB.

The terminal attempts to receive the corresponding CRS sequence based on the above time-frequency domain resource, and in a case where the terminal successfully receives the above CRS sequence, the terminal determines a transmission state of the corresponding on demand signal.

In embodiment 3.2, the first signal includes a simplified SSB or SSB signal.

In embodiment 3.2.1, the simplified SSB may be a PSS signal or an SSS signal. The signal is transmitted based on an SSB pattern, that is, the PSS is transmitted on a first symbol corresponding to an SSB, occupying 127 REs. Alternatively, the SSS is transmitted on a third symbol corresponding to an SSB, occupying 127 REs. A relative position of a corresponding PSS or SSS in the SSB is shown, for example, in FIG. 4E.

In embodiment 3.2.2, the simplified SSB may be a PSS signal and an SSS signal. The PSS signal and SSS signal occupy 127 corresponding REs. The PSS is transmitted on a first symbol corresponding to an SSB, occupying 127 REs; and the SSS is transmitted on a second symbol corresponding to the SSB, occupying 127 REs.

In embodiment 3.2.3, the simplified SSB may be a PBCH and a PSS, or a PBCH and an SSS. In a case where the PBCH indicates the transmission state of the on demand signal, the network device may refarm a corresponding MIB to indicate the transmission state of the on demand signal. The indication information includes one or more of:
indication information corresponding to an SSB transmission state: for example, no longer transmitting a corresponding SSB, or continuing to transmit a corresponding SSB;
indication information corresponding to an SIB1 transmission state: for example, no longer transmitting a corresponding SIB1, or continuing to transmit a corresponding SIB1;
indication information of a starting position (offset) of an effective window corresponding to a transmission state, for example, in which the terminal determines a starting position of a corresponding time window based on a time unit where a DCI received is located and an offset indication, and the offset is measured in a time unit, such as: frame, subframe, slot, symbol, SSB period, Type0CSS blind detection period, etc.;
indication information for a time length corresponding to a transmission state; for example, in which the time length is measured in a time unit, and the time unit is based on the above definition, which is not repeated here; and
indication information for an effective cell/BWP/SSB index/beam corresponding to a transmission state; for example, in which an information field may be configured for one or more cells, BWPs, SSB indexes, and beams, etc. applied by DCI indication information.

In embodiment 3.2.4, the first signal may be a first SSB transmitted at a first time domain position or a first frequency domain position. For example, the first SSB may be an SSB that is not associated with CORESET#0. For example, the first SSB only indicates the transmission state of the on demand signal. In this scenario, an information unit (e.g., pdcch-ConfigSIB1) within an MIB corresponding to the first SSB may indicates the transmission state of the on demand signal. For specific indication parameters, see embodiment 3.2.3.

In embodiment 3.2.5, in one possible implementation, the network device sends configuration information to indicate a first time domain position and/or a first frequency domain position where a simplified SSB or a first SSB may be transmitted. Alternatively, a first time domain position/or a first frequency domain position may be determined based on a predefined manner. For example, the time domain position is a first or last SSB that may be transmitted within a corresponding SSB burst with a period of 160ms. The SSB is not associated with CORESET#0, for example, for an FR1 subcarrier offset > 23 and for an FR2 subcarrier offset > 11. The network device sends a corresponding simplified SSB sequence or first SSB sequence based on the above time-frequency domain resource to indicate that the transmission state of the on demand signal changes.

For example, in a case where the network device sends SIB1/SSB, the network device indicates a state switch for the SIB1/SSB by transmitting the simplified SSB sequence or the first SSB sequence, that is, stops transmitting the SIB1/SSB.

For example, in a case where the network device stops transmitting SIB1/SSB, the network device indicates a state switch for the SIB1/SSB by transmitting the simplified SSB sequence or the first SSB sequence, that is, sends the SIB1/SSB.

Based on the above time-frequency domain resource, the terminal attempts to receive a corresponding simplified SSB sequence or first SSB sequence. In a case where the terminal successfully receives the above simplified SSB sequence or first SSB sequence, the terminal determines that a corresponding transmission state of the on demand signal changes.

In embodiment 3.3, the first signal includes a TRS or a CSI-RS signal.

In embodiment 3.3.1, the first signal may be a periodic (P) TRS signal or an aperiodic-persistent (AP) TRS signal. The TRS signal may be determined based on the predefined manner, for example, a TRS signal occupying 24 RBs, and/or a TRS signal transmitted at a first time domain position and/or a first frequency domain position.

In embodiment 3.3.2, the signal may be a P, AP, or semi-persistent (SP) non zero power (NZP) CSI-RS. The NZP CSI-RS may be determined based on the predefined manner, for example, the NZP CSI-RS occupying 24 RBs, and/or a TRS signal transmitted at a first time domain position and/or a first frequency domain position.

In embodiment 3.3.3, in one possible implementation, the network device sends configuration information to indicate a first time domain position and/or a first frequency domain position where the CSI-RS may be transmitted. Alternatively, a first time domain position/or a first frequency domain position may be determined based on the predefined manner.

The network device sends a corresponding CSI-RS sequence based on the above time-frequency domain resource to indicate that the transmission state of the on demand signal changes.

For example, in a case where the network device sends SIB1/SSB, it indicates that a transmission state of the SIB1/SSB changes by transmitting the TRS/CSI-RS sequence, that is, stops transmitting the SIB1/SSB.

For example, in a case where the network device stops transmitting SIB1/SSB, it indicates that a transmission state of the SIB1/SSB changes by transmitting the TRS/CSI-RS sequence, that is, sends the SIB1/SSB.

The terminal determines that the above time-frequency domain resource and/or TRS/CSI-RS signal sequence is a transmission state indication signal for the on demand signal. The terminal attempts to receive the corresponding TRS/CSI-RS sequence based on the above time-frequency domain resource. In a case where the terminal successfully receives the above TRS/CSI-RS sequence, it determines a corresponding transmission state of the on demand signal.

Embodiments of the present disclosure mainly design related reference signals to indicate the transmission state of the on demand signal, which helps to achieve network energy saving while ensuring the consistency between the network device and the terminal.

The embodiments of the present disclosure also provide an apparatus for implementing any one of the above methods. For example, an apparatus is provided, including units or modules for implementing the steps performed by the terminal in any one of the above methods. For another example, another apparatus is provided, including units or modules for implementing steps performed by the network device (for example, an access network device, a core network device, etc.) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor invoking and the remaining part implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

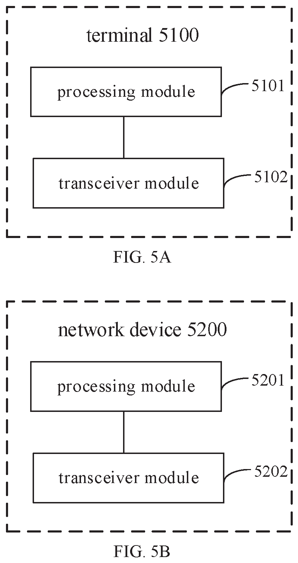

FIG. 5A is a block diagram of a terminal according to an embodiment of the present disclosure. As shown in FIG. 5A, the terminal 5100 may include: a processing module 5101 and a transceiver module 5102.

In some embodiments, the above processing module 5101 is configured to determine a resource position where a first signal is located.

In some embodiments, the above transceiver module 5102 is configured to attempt to receive the first signal at the resource position.

In some embodiments, the above processing module 5101 is further configured to, in response to successfully receiving the first signal, determine, based on the first signal, that a transmission state of an on demand signal changes.

Optionally, the above processing module 5101 is configured to execute at least one of other steps (e.g., steps S2103, S2105, S2107, S2203, S2204, but not limited herein), performed by the terminal 5100 in any of the above methods, which are not repeated here.

Optionally, the above transceiver module 5102 is configured to execute at least one of the communication steps such as transmitting and/or receiving (e.g., step S2104, but not limited herein) performed by the terminal 5100 in any of the above methods, which are not repeated here.

FIG. 5B is a block diagram of a network device according to an embodiment of the present disclosure. As shown in FIG. 5B, the network device 5200 may include: a processing module 5201 and a transceiver module 5202.

In some embodiments, the above processing module 5201 is configured to determine that a transmission state of an on demand signal needs to be changed.

In some embodiments, the above processing module 5201 is further configured to determine a resource position where a first signal is located.

In some embodiments, the above transceiver module 5202 is configured to send the first signal to a terminal at the resource position.

Optionally, the above processing module 5201 is configured to execute at least one of other steps (e.g., steps S2101, S2102, S2106, S2201, and S2202, but not limited herein) performed by the network device 5200 in any of the above methods, which are not repeated here.

Optionally, the above transceiver module 5202 is configured to execute at least one of the communication steps such as transmitting and/or receiving (e.g., step S2104, but not limited herein) performed by the network device 5200 in any of the above methods, which are not repeated here.

In some embodiments, the transceiver module may include a transmitting module and/or a receiving module. The transmitting module and the receiving module may be separate or integrated together. Optionally, the transceiver module may be interchanged with a transceiver.

In some embodiments, the processing module may be one module or may include a plurality of sub-modules. Optionally, the plurality of sub-modules respectively execute all or part of the steps required to be performed by the processing module. Optionally, the processing module may be interchanged with a processor.

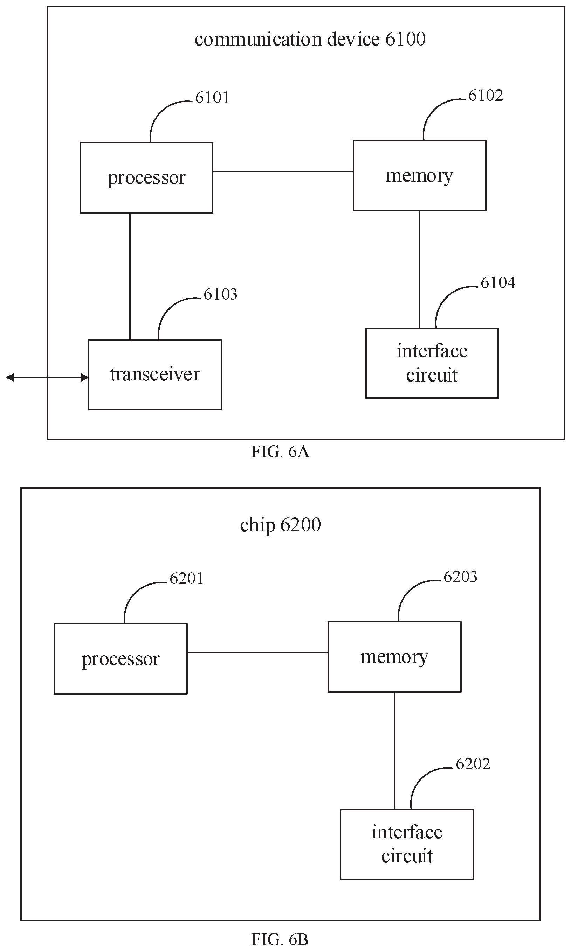

FIG. 6A is a block diagram of a communication device 6100 according to an embodiment of the present disclosure. The communication device 6100 may be a network device (e.g., an access network device, a core network device, etc.), or a terminal (e.g., a UE, etc.), or a chip, a chip system, or a processor, etc., that supports the network device to implement any one of the above methods, or a chip, a chip system, or a processor, etc., that supports the terminal to implement any one of the above methods. The communication device 6100 may be used to implement the method in the above method embodiments. For details, reference may be made to the description in the above method embodiments.

As shown in FIG. 6A, the communication device 6100 may include one or more processors 6101. The processor 6101 may be a general-purpose processor or a special-purpose processor. For example, it may be a baseband processor or a central processing unit. The baseband processor may be used to process communication protocols and communication data, and the central processing unit may be used to control communication devices (such as base stations, baseband chips, terminals, terminal chips, DU or CU, etc.) to execute computer programs and process computer program data. Optionally, the communication device 6100 is used to perform any one of the above methods. Optionally, one or more processors 6101 are used to call the instructions to cause the communication device 6100 to perform any one of the above methods.

In some embodiments, the communication device 6100 further includes one or more transceivers 6102. When the communication device 6100 includes one or more transceivers 6102, the transceiver 6102 performs at least one of the communication steps such as transmitting and/or receiving in the above method (e.g., step S2104, but not limited herein), and the processor 6101 performs at least one of the other steps (e.g., steps S2101, S2102, S2103, S2105, S2106, S2107, S2201, S2202, S2203, S2204, but not limited herein). In an optional embodiment, the transceiver may include a receiver and/or a transmitter, which may be separate or integrated together. Optionally, the terms such as transceiver, transceiving unit, transceiving machine, transceiving circuit, interface circuit, and interface may be used interchangeably; the terms such as transmitter, transmitting unit, transmitting machine, and transmitting circuit may be used interchangeably; and the terms such as receiver, receiving unit, receiving machine, and receiving circuit may be used interchangeably.

In some embodiments, the communication device 6100 further includes one or more memories 6103 for storing data. Optionally, all or part of the memory 6103 may be located outside the communication device 6100. In an optional embodiment, the communication device 6100 may include one or more interface circuits 6104. Optionally, the interface circuit 6104 is connected to the memory 6102. The interface circuit 6104 may be used to receive data from the memory 6102 or other devices, and may be used to send data to the memory 6102 or other devices. For example, the interface circuit 6104 may read data stored in the memory 6102 and send the data to the processor 6101.

The communication device 6100 in the description of the above embodiments may be a network device or a terminal, but the scope of the communication device 6100 described in the disclosure is not limited herein, and the structure of the communication device 6100 may not be limited by FIG. 6A. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 6B is a block diagram of a chip 6200 according to an embodiment of the present disclosure. For the case where the communication device 6100 may be a chip or a chip system, reference may be made to the block diagram of the chip 6200 shown in FIG. 6B, which is not limited herein.

The chip 6200 includes one or more processors 6201. The chip 6200 is used to perform any one of the above methods.

In some embodiments, the chip 6200 further includes one or more interface circuits 6202. Optionally, the terms such as interface circuit, interface, and transceiver pin may be used interchangeably. In some embodiments, chip 6200 further includes one or more memories 6203 for storing data. Optionally, all or part of the memory 6203 may be located outside of the chip 6200. Optionally, the interface circuit 6202 is connected to the memory 6203. The interface circuit 6202 may be used to receive data from the memory 6203 or other devices, and the interface circuit 6202 may be used to send data to the memory 6203 or other devices. For example, the interface circuit 6202 may read data stored in the memory 6203 and send the data to the processor 6201.

In some embodiments, the interface circuit 6202 performs at least one of the communication steps such as transmitting and/or receiving in the above method (e.g., step S2104, but not limited herein). The interface circuit 6202 performs communication steps such as transmitting and/or receiving in the above method, for example, the interface circuit 6202 performs data interaction between the processor 6201, the chip 6200, the memory 6203 or the transceiver device. In some embodiments, the processor 6201 performs at least one of other steps (e.g., steps S2101, S2102, S2103, S2105, S2106, S2107, S2201, S2202, S2203, S2204, but not limited herein).

The modules and/or devices described in the various embodiments, such as virtual devices, physical devices, and chips, may be combined or separated arbitrarily as needed. Optionally, some or all of the steps may be performed collaboratively by a plurality of modules and/or devices, which is not limited herein.

The present disclosure also provides a storage medium for storing instructions. When the instructions are running on the communication device 6100, the communication device 6100 is caused to implement any one of the above methods. Optionally, the storage medium is an electronic storage medium. Optionally, the storage medium is a computer-readable storage medium, but it is not limited herein, and it may also be a storage medium readable by other devices. Optionally, the storage medium may be a non-transitory storage medium, but it is not limited herein, and it may also be a transitory storage medium.

The present disclosure also provides a program product. When the program product is executed by the communication device 6100, the communication device 6100 is caused to implement any one of the above methods. Optionally, the program product is a computer program product.

The present disclosure also provides a computer program. When the computer program is executed on a computer, the computer is caused to implement any one of the above methods.

It should be understood that the present disclosure is not limited to the precise structures described above and shown in the accompanying drawings, and various modifications and changes may be made without departing from its scope. The scope of the present disclosure is limited only by the appended claims.

## Claims

1. An information transmission method, comprising:
determining a resource position where a first signal is located;
attempting to receive the first signal at the resource position; and
in response to successfully receiving the first signal, determining, based on the first signal, that a transmission state of an on demand signal changes.

2. The information transmission method according to claim 1, wherein the first signal is any one of:
a first reference signal, comprising any one of: a cell-specific reference signal (CRS); and a channel state information-reference signal (CSI-RS);
a synchronization signal/physical broadcast channel (PBCH) block (SSB), comprising one or two of: a primary synchronization signal (PSS), a secondary synchronization signal (SSS), and a PBCH; and
a first SSB, only indicating the transmission state of the on demand signal.

3. The information transmission method according to claim 1 or 2, wherein the first signal indicates at least one of:
stopping transmitting one or more of on demand signals;
transmitting one or more of the on demand signals; or
an acknowledge (ACK) message, configured to respond to a request message and acknowledge a transmission of one or more of the on demand signals, wherein the request message is configured to request the transmission of one or more of the on demand signals.

4. The information transmission method according to any one of claims 1 to 3, wherein the on demand signal comprises at least one of:
a second SSB, being a periodically transmitted SSB;
a system message;
a random access channel (RACH); or
a system information block (SIB).

5. The information transmission method according to any one of claims 1 to 4, wherein determining the resource position where the first signal is located comprises at least one of:
determining the resource position where the first signal is located based on a first radio resource control (RRC) signaling, wherein the first RRC signaling is used to configure the resource position where the first signal is located; or
determining the resource position where the first signal is located based on a predefined manner.

6. The information transmission method according to claim 5, further comprising:
determining a plurality of patterns corresponding to the first signal based on the predefined manner; and
determining a first pattern used by the first signal from the plurality of patterns based on the first RRC signaling;
wherein attempting to receive the first signal at the resource position comprises:
attempting to receive the first signal at the resource position according to the first pattern.

7. The information transmission method according to claim 5 or 6, further comprising at least one of:
determining a sequence corresponding to the first signal based on a second RRC signaling, wherein the second RRC signaling is used to configure the sequence corresponding to the first signal; and
determining a sequence corresponding to the first signal based on the predefined manner.

8. The information transmission method according to any one of claims 1 to 7, further comprising at least one of:
in a case where the first signal is a CSI-RS and a quantity of time units occupied by the CSI-RS is equal to a first value, determining the CSI-RS to indicate that the transmission state of the on demand signal changes;
in a case where the first signal is the CSI-RS and a quantity of resource blocks (RBs) occupied by the CSI-RS is equal to a second value, determining the CSI-RS to indicate that the transmission state of the on demand signal changes; or
in a case where the first signal is the CSI-RS and a first pattern used by the CSI-RS is one of specified patterns, determining the CSI-RS to indicate that the transmission state of the on demand signal changes.

9. The information transmission method according to any one of claims 1 to 7, further comprising:
receiving indication information sent by a network device in a case where the first signal is a CSI-RS, wherein the indication information indicates that the CSI-RS indicates that the transmission state of the on demand signal changes.

10. The information transmission method according to any one of claims 1 to 9, further comprising any one of:
in a case where the first signal indicates discarding a transmission of one or more of on demand signals, determining to no longer receive and/or no longer send one or more of the on demand signals;
in a case where the first signal indicates the transmission of one or more of the on demand signals, starting receiving one or more of the on demand signals, and/or starting transmitting one or more of the on demand signals; and
in a case where the first signal indicates an ACK message, starting receiving one or more of the on demand signals, and/or starting transmitting one or more of the on demand signals, wherein the ACK message is configured to respond to a request message and acknowledge the transmission of one or more of the on demand signals, and the request message is configured to request the transmission of one or more of the on demand signals.

11. The information transmission method according to claim 2, wherein the first SSB signal is any one of:
a non-cell-defining SSB (NCD-SSB); and
a cell-defining SSB (CD-SSB).

12. An information transmission method, comprising:
determining that a transmission state of an on demand signal needs to be changed;
determining a resource position where a first signal is located; and
transmitting the first signal to a terminal at the resource position.

13. The information transmission method according to claim 12, wherein the first signal is any one of:
a first reference signal, comprising any one of: a cell-specific reference signal (CRS); and a channel state information-reference signal (CSI-RS);
a synchronization signal/physical broadcast channel (PBCH) block (SSB), comprising one or two of: a primary synchronization signal (PSS), a secondary synchronization signal (SSS), and a PBCH; and
a first SSB, only indicating the transmission state of the on demand signal.

14. The information transmission method according to claim 12 or 13, wherein the first signal indicates at least one of:
stopping transmitting one or more of on demand signals;
transmitting one or more of the on demand signals; or
an acknowledge (ACK) message, configured to respond to a request message and acknowledge a transmission of one or more of the on demand signals, wherein the request message is configured to request the transmission of one or more of the on demand signals.

15. The information transmission method according to any one of claims 12 to 14, wherein the on demand signal comprises at least one of:
a second SSB, being a periodically transmitted SSB;
a system message;
a random access channel (RACH); or
a system information block (SIB).

16. The information transmission method according to any one of claims 12 to 15, wherein determining the resource position where the first signal is located comprises:
determining the resource position where the first signal is located based on a predefined manner.

17. The information transmission method according to any one of claims 12 to 15, further comprising:
transmitting a first radio resource control (RRC) signaling, wherein the first RRC signaling is used to configure the resource position where the first signal is located.

18. The information transmission method according to claim 17, wherein the first RRC signal is further used to configure a first pattern used by the first signal.

19. The information transmission method according to any one of claims 16 to 18, further comprising:
determining a sequence corresponding to the first signal based on the predefined manner.

20. The information transmission method according to any one of claims 16 to 18, further comprising:
transmitting a second RRC signaling, wherein the second RRC signaling is used to configure a sequence corresponding to the first signal.

21. The information transmission method according to any one of claims 12 to 20, further comprising at least one of:
in a case where the first signal is a CSI-RS, configuring a quantity of time units occupied by the CSI-RS to be equal to a first value;
in a case where the first signal is a CSI-RS, configuring a quantity of resource blocks (RBs) occupied by the CSI-RS to be equal to a second value; or
in a case where the first signal is a CSI-RS, configuring one of specified patterns as a first pattern used by the CSI-RS.

22. The information transmission method according to any one of claims 12 to 21, further comprising:
transmitting indication information to the terminal in a case where the first signal is a CSI-RS, wherein the indication information indicates that the CSI-RS indicates that the transmission state of the on demand signal changes.

23. The information transmission method according to any one of claims 12 to 22, further comprising any one of:
in a case where the first signal indicates discarding a transmission of one or more of on demand signals, no longer transmitting one or more of the on demand signals, and/or no longer receiving one or more of the on demand signals;
in a case where the first signal indicates the transmission of one or more of the on demand signals, starting transmitting one or more of the on demand signals, and/or starting receiving one or more of the on demand signals; and
in a case where the first signal indicates an ACK message, starting transmitting one or more of the on demand signals, and/or starting receiving one or more of the on demand signals; wherein the ACK message is configured to respond to a request message and acknowledge the transmission of one or more of the on demand signals, and the request message is configured to request the transmission of one or more of the on demand signals.

24. The information transmission method according to claim 13, wherein the first SSB is any one of:
a non cell defining SSB (NCD-SSB); and
a cell defining SSB (CD-SSB).

25. A terminal, comprising:
a processing module, configured to determine a resource position where a first signal is located; and
a transceiver module, configured to attempt to receive the first signal at the resource position,
wherein the processing module is further configured to, in response to successfully receiving the first signal, determine, based on the first signal, that a transmission state of an on demand signal changes.

26. A network device, comprising:
a processing module, configured to determine that a transmission state of an on demand signal needs to be changed,
wherein the processing module is further configured to determine a resource position where a first signal is located; and
a transceiver module, configured to send the first signal to a terminal at the resource position.

27. A terminal, comprising:
one or more processors,
wherein the one or more processors are configured to perform the information transmission method according to any one of claims 1 to 11.

28. A network device, comprising:
one or more processors,
wherein the one or more processors are configured to perform the information transmission method according to any one of claims 12 to 24.

29. A communication system, comprising a terminal and a network device, wherein the terminal is configured to perform the information transmission method according to any one of claims 1 to 11, and the network device is configured to perform the information transmission method according to any one of claims 12 to 24.

30. A storage medium, having stored thereon instructions that, when run on a communication device, cause the communication device to perform the information transmission method according to any one of claims 1 to 12 or any one of claims 12 to 24.
